(19) Europäisches Patentamt
European Patent Office
Office européen des brevets

(11) **EP 3 552 814 B1**

(12) **EUROPEAN PATENT SPECIFICATION**

(45) Date of publication and mention of the grant of the patent:
**03.03.2021 Bulletin 2021/09**

(51) Int Cl.:
*B32B 5/02* *(2006.01)*     *B32B 5/26* *(2006.01)*
*B32B 27/12* *(2006.01)*     *B32B 1/00* *(2006.01)*
*B29C 45/14* *(2006.01)*

(21) Application number: **18166365.9**

(22) Date of filing: **09.04.2018**

(54) **FIBER-REINFORCED COMPOSITES INCLUDING AND/OR FORMED IN PART FROM FIBROUS NON-WOVEN LAYERS**

FASERVERSTÄRKTE VERBUNDWERKSTOFFE, DIE ZUM TEIL AUS FASERIGEN VLIESSTOFFSCHICHTEN BESTEHEN UND/ODER HERGESTELLT SIND

COMPOSITES RENFORCÉS PAR DES FIBRES COMPRENANT ET/OU FORMÉS EN PARTIE À PARTIR DE COUCHES FIBREUSES NON TISSÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**16.10.2019 Bulletin 2019/42**

(73) Proprietor: **SHPP Global Technologies B.V.**
**4612 PX Bergen op Zoom (NL)**

(72) Inventors:
• **DAVIS, Scott**
**4612 PX Bergen op Zoom (NL)**
• **THEOFANOUS, Theofanis**
**4612 PX Bergen op Zoom (NL)**
• **VERGHESE, Nikhil**
**4612 PX Bergen op Zoom (NL)**

(74) Representative: **J A Kemp LLP**
**14 South Square**
**Gray's Inn**
**London WC1R 5JJ (GB)**

(56) References cited:
WO-A1-2016/196472     US-A1- 2010 021 718
US-A1- 2017 203 551

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**FIELD OF INVENTION**

The present invention relates generally fiber-reinforced composites and more specifically to: (1) such composites that have: (a) a core including or formed, at least in part, from one or more fibrous non-woven layers; and (b) one or more skins disposed outside of the core, each of the skin(s) including one or more unidirectional and/or woven fiber-reinforced layers; (2) stacks of layers that can be consolidated to form such composites; (3) articles, such as portable electronic device (PED) housing panels, including such composites; and (4) methods for making such composites and articles.

**BACKGROUND**

Fiber-reinforced composites can be used to form components having relatively high stiffnesses and strengths, as well as relatively low weights, when compared to components formed from conventional materials. As a result, fiber-reinforced composites are used in a variety of applications across a range of industries, including the automotive, aerospace, and consumer electronics industries.

To produce a typical fiber-reinforced composite, a stack of layers, each having fibers dispersed within a matrix material, can be consolidated under heat and pressure. In some instances, the composite can be used directly as a component, and, in other instances, the composite can be processed to form a component. Such processing can include shaping (e.g., thermoforming, heating and draping the composite onto a structure, such as a structure to be reinforced by the composite, a form, a mold portion, or the like), overmolding, in which injection molding material is injected into a mold containing the composite so as to overmold the composite, and/or the like.

Producing such a fiber-reinforced composite can pose a number of challenges. For example, during consolidation, if pressure applied to the stack is uneven-caused by uneven pressing surfaces used to press the stack, uneven distributions of fibers and matrix material within the layer(s) of the stack, and/or the like, each of which is not uncommon-the composite may suffer from uneven distributions of fibers and matrix material, unpredictable structural characteristics, an uneven surface finish, and/or the like.

Likewise, processing such a fiber-reinforced composite can be problematic. To illustrate, when heated and draped, the composite-depending on the stack-may either lack sufficient compliancy to mitigate undesired buckling or winkling, or lack sufficient stability to mitigate undesired movement of the layer(s) relative to one another, fibers of the layer(s) from their desired orientations, and/or the like. To further illustrate, during overmolding, the composite and the injection molding material may shrink at different rates, causing deformation (e.g., bowing and/or twisting) of the overmolded component. Additionally, if the composite is not appropriately sized for the mold-whether too thick or too thin-potentially mold-damaging flashing may occur, the bond between the composite and the injection molding material may be substandard, the overmolded part may be aesthetically displeasing, and/or the like.

In many instances, it is desirable for a fiber-reinforced composite to be thin (e.g., having a thickness that is less than approximately 2.0, 1.75, 1.50, 1.25, 1.0, or 0.5 millimeters), such as, for example, when the composite is to be used in a PED housing panel. Typically, such a PED housing needs to be thin-walled to reduce its form factor and weight, yet stiff enough to protect PED components-such as a screen, processor, board, user-input device, and/or other component-disposed within the housing. Such a thin fiber-reinforced composite, however, may be more susceptible to the problems described above and others during its production and processing; for example, due to its reduced thickness, a thin fiber-reinforced composite may be less able to compensate for uneven distributions of pressure during consolidation, less stable during draping, and more prone to deformation during overmolding.

US2017/0203551 describes a housing for an electronic device comprising a composite structure having a core layer comprising a first thermoplastic material, and first and second skin layers, on opposite sides of said core, comprising a second thermoplastic material.

**SUMMARY**

In an attempt to address these issues, sandwich composites that include a foam or honeycomb core and fiber-reinforced skins have been used. Their thicknesses being the same, however, such a sandwich composite has a stiffness that is often unsuitably lower than that of a fiber-reinforced composite not including such a core. Further, flow of matrix material through a foam or honeycomb core may difficult to control; thus, bonding of skin layers to the core during consolidation may be inconsistent.

Some embodiments of the present stacks can promote an even application of pressure between the stack and pressing elements during consolidation of the stack to form a composite, facilitate such consolidation (including by allowing the use of higher consolidation temperatures and pressures), facilitate processing of the stack and/or composite (e.g., by having increased compliancy without unduly sacrificing stability), and/or the like, by, for example, including a core having at least one non-woven layer with: (1) a first set of resin fibers, each comprising at least a majority, by weight, of a first core thermoplastic material having a first core transition temperature and a first low-shear viscosity; and (2) a second set of resin fibers coupled to the first set of resin fibers, each of the second set of resin fibers having a second core transition temperature and a second low-shear viscosity, wherein the first core transition temperature is at least 10% lower than the second core transition temperature and/or the first low-shear viscosity is at least 50% lower than the second low-shear viscosity. In this way, the first set of resin fibers can encourage consolidation of the non-woven layer with other layers in the stack, and the second set of resin fibers can: (1) resist lateral flow of resin material through the non-woven layer; (2) promote stability of the non-woven layer; and (3) promote resiliency of the non-woven layer.

The term "coupled" is defined as connected, although not necessarily directly, and not necessarily mechanically; two items that are "coupled" may be unitary with each other. The terms "a" and "an" are defined as one or more unless this disclosure explicitly requires otherwise. The term "substantially" is defined as largely but not necessarily wholly what is specified (and includes what is specified; e.g., substantially 90 degrees includes 90 degrees and substantially parallel includes parallel), as understood by a person of ordinary skill in the art. In any disclosed embodiment, the term "substantially" or "approximately" can be substituted with "within [a percentage] of' what is specified, where the percentage includes .1, 1, 5, and 10 percent.

The phrase "and/or" means and or or. To illustrate, A, B, and/or C includes: A alone, B alone, C alone, a combination of A and B, a combination of A and C, a combination of B and C, or a combination of A, B, and C. In other words, "and/or" operates as an inclusive or.

The terms "comprise" (and any form of comprise, such as "comprises" and "comprising"), "have" (and any form of have, such as "has" and "having"), "include" (and any form of include, such as "includes" and "including"), and "contain" (and any form of contain, such as "contains" and "containing") are open-ended linking verbs. As a result, an apparatus that "comprises," "has," "includes," or "contains" one or more elements possesses those one or more elements, but is not limited to possessing only those one or more elements. Likewise, a method that "comprises," "has," "includes," or "contains" one or more steps possesses those one or more steps, but is not limited to possessing only those one or more steps.

Any embodiment of any of the apparatuses, systems, and methods can consist of or consist essentially of - rather than comprise/have/include/contain - any of the described steps, elements, and/or features. Thus, in any of the claims, the term "consisting of' or "consisting essentially of' can be substituted for any of the open-ended linking verbs recited above, in order to change the scope of a given claim from what it would otherwise be using the open-ended linking verb.

Further, a device or system that is configured in a certain way is configured in at least that way, but it can also be configured in other ways than those specifically described.

The feature or features of one embodiment may be applied to other embodiments, even though not described or illustrated, unless expressly prohibited by this disclosure or the nature of the embodiments.

Some details associated with the embodiments are described above, and others are described below.

## BRIEF DESCRIPTION OF THE DRAWINGS

The following drawings illustrate by way of example and not limitation. For the sake of brevity and clarity, every feature of a given structure is not always labeled in every figure in which that structure appears. Identical reference numbers do not necessarily indicate an identical structure. Rather, the same reference number may be used to indicate a similar feature or a feature with similar functionality, as may non-identical reference numbers. Each of the figures, unless identified as a schematic view, is drawn to scale, meaning the sizes of the elements depicted in the figure are accurate relative to each other for at least the embodiment depicted in the figure.

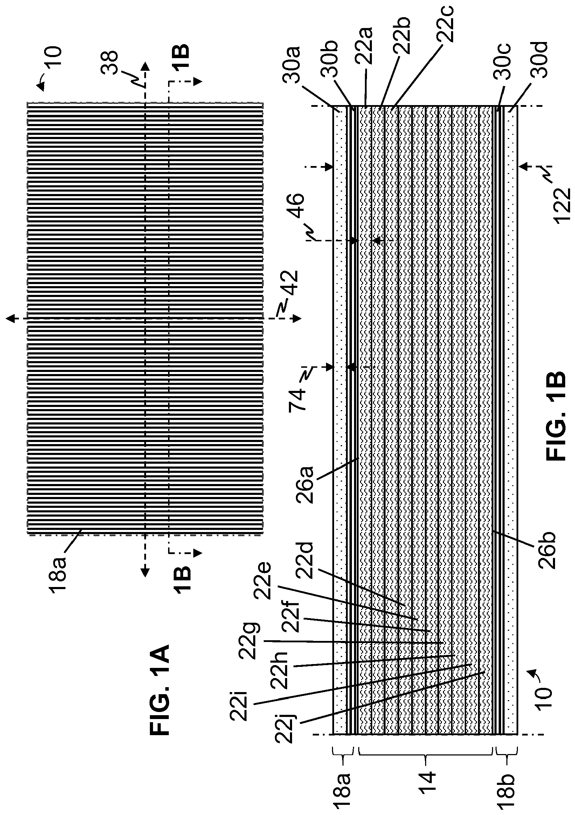

FIG. 1A is a schematic top view of one of the present stacks of layers, which can be consolidated to form a composite, the stack including: (1) a core having non-woven layers; and (2) skins disposed on opposing sides of the core, each of the skins including unidirectional fiber-reinforced layers.

FIG. IB is a schematic cross-sectional side view of the stack of FIG. 1A, taken along line 1B-1B of FIG. 1A.

FIG. 1C is a schematic exploded view of the stack of FIG. 1A, with some of the non-woven layers not shown.

FIG. 2A is a schematic top view of a non-woven layer that is usable in some of the present stacks, composites, and PED housing panels.

FIG. 2B is a photograph of the non-woven layer of FIG. 2A.

FIGs. 3A and 3B are schematic top views of a unidirectional fiber-reinforced layer and a woven fiber-reinforced layer, respectively, each of which is usable in some of the present stacks, composites, and PED housing panels.

FIG. 4 is a schematic view of a press that can be used to consolidate some of the present stacks to form some of the present composites.

**FIG. 5** is a schematic view of an article that includes one of the present composites.

**FIG. 6A** is a front perspective view of one of the present tablet housing panels that includes one of the present composites.

**FIG. 6B** is a back perspective view of the tablet housing panel of FIG. 6A.

**FIGs. 6C** and **6D** are front and back views, respectively, of the tablet housing panel of FIG. 6A.

**FIG. 6E** is a cross-sectional side view of the tablet housing panel of FIG. 6A, taken along line 6E-6E of FIG. 6B.

**FIGs. 6F** and **6G** are opposing side views of the tablet housing panel of FIG. 6A.

**FIGs. 6H** and **6I** are opposing end views of the tablet housing panel of FIG. 6A.

**FIG. 7** is a schematic perspective view of a laptop housing, showing suitable locations for ones of the present composites.

**FIG. 8** is a cross-sectional side view of a laptop A cover that includes one of the present composites.

**FIGs. 9A-9D** are schematic views that illustrate some of the present methods for forming a PED housing panel by overmolding injection molding material onto one of the present composites.

**FIGs. 10A** and **10B** are photographs of one of the present composites that includes a core having non-woven layers.

**FIGs. 11A** and **11B** are photographs of a comparative composite that does not include any non-woven layers.

**FIG. 12** is a photograph of one of the present tablet housing panels that includes one of the present composites.

**FIG. 13A-13D** are cross-sectional photographs of three of the present composites-one of S1, one of S2, and one of S3-and a comparative composite-one of C2-in that order.

**FIGs. 14A-14C** are each a cross-sectional photograph of one of S2.

**FIGs. 15A-15D** are each a photograph showing the surface roughness of one of S1, S2, S3, and C2, respectively.

**FIGs. 16A-16D** are each a graph showing the surface roughness of one of S1, S2, S3, and C2, respectively.

## DETAILED DESCRIPTION

FIGs. 1A-1C depict a stack 10 of layers that can be consolidated to form a composite. The layers of stack 10 are arranged such that the stack includes: (1) a core 14 including a stack-a sub-stack of stack 10-of one or more non-woven layers (e.g., 22a-22j); and (2) skins 18a and 18b that are disposed on opposing sides of the core, each of the skins including a stack-a sub-stack of stack 10-of one or more woven and/or unidirectional fiber-reinforced layers (e.g., for skin 18a, 30a and 30b, and, for skin 18b, 30c and 30d). In other stacks, a skin (e.g., 18a or 18b) can be disposed on one, but not the other, side of a core (e.g., 14). As used herein, a "stack," such as a stack of one or more non-woven layers, can include a single layer. In these ways, the present composites (consolidated ones of the present stacks) can be characterized as skin-core, sandwich, ABA, and/or the like composites.

Core 14 can be bounded by its non-woven layers; to illustrate, one of the non-woven layers 22a can define at least a portion of an upper surface 26a of the core, and one of the non-woven layers 22j can define at least a portion of a lower surface 26b of the core. Stack 10 may not include any non-woven layers other than those of core 14. While core 14 includes ten non-woven layers, 22a-22j, in other stacks, a core can include any suitable number of non-woven layer(s), such as, for example, 1, 2, 3, 4, 5, 6, 7, 8, 9, 10, 11, 12, 13, 14, 15, or more non-woven layer(s). And, in stacks having a core with a single non-woven layer, that non-woven layer can define at least a portion of each of the upper and lower surfaces of the core.

In the stack of core 14, each of the non-woven layers can have dimensions that are substantially the same as those of each other of the non-woven layers. For example, the non-woven layers can each have substantially the same length and width (e.g., measured along directions 38 and 42, respectively, in FIG. 1A). Each of the non-woven layers can, but need not, have substantially the same thickness (e.g., 46, shown for non-woven layer 22a). For further example, the non-woven layers can each have substantially the same maximum planform area, which is an area spanned by the layer between its edges. In other stacks, the non-woven layers can have varying dimensions, including lengths, widths, thicknesses, and/or maximum planform areas.

A non-woven layer can be characterized as one that includes a sheet or web of multidirectional fibers that are connected to one another via entanglement and/or thermal and/or chemical bonds rather than in a weave or knit. Exemplary non-woven layers include those that are dry-laid, wet-laid, spunmelt, or the like. While these types of non-woven layers can each be manufactured by producing a sheet or web of fibers, and, in some instances, subsequently connecting those fibers to one another, they differ in how the sheet or web is produced. To illustrate, for a dry-laid non-woven layer, the sheet or web can be produced using an air laying process (e.g., in which fibers from a cloud of fibers are deposited onto a surface via suction), a carding process (e.g., in which fibers, sometimes in tufts, are moved relative to one or more toothed or wire-covered surfaces while in contact with those surfaces), or the like. For a wet-laid non-woven layer, a slurry including fibers and a solvent can be deposited onto a surface, after which the solvent can be removed to produce the sheet or web. And, for a spunmelt non-woven layer, the sheet or web can be produced by extruding a polymeric material through a spinneret to produce fibers and depositing those fibers onto a surface (e.g., whether such deposition is facilitated by a high-velocity air stream, as in a meltblown process, or not, as in a spun-laid process). In some instances, once the sheet or web is produced-using any of the processes described above and other processes-fibers in the sheet or web can be connected to one another by entangling the fibers (e.g., via needling, hydroentanglement, and/or the like), heating the fibers (e.g., by passing the sheet or web between heated pressing elements, through an oven, and/or the like), chemically bonding the fibers (e.g., using an adhesive), and/or the like.

A non-woven layer may be more compressible and resilient than a unidirectional or woven-fiber reinforced layer. For example, when compared to a unidirectional or woven fiber-reinforced layer, fibers in the non-woven layer-by virtue of being arranged in a multi-directional sheet or web-may be permitted a greater degree of movement relative to one another, have increased void space between them, and/or the like. For further example, and also via such arrangement, fibers in the non-woven layer may bend when the non-woven layer is compressed and, depending on their type(s), unbend resiliently when the non-woven layer is decompressed.

When a non-woven layer is included in a stack, its compressibility and resilience can provide a number of benefits. For one, when the stack is pressed between pressing elements during consolidation, the non-woven layer can deform to compensate for irregularities on and/or unevenness of the pressing surfaces and/or other layer(s) of the stack, thereby encouraging uniform pressure between the stack and the pressing elements, which, in turn, can enhance consolidation of the stack, promote a smooth surface finish for the composite, and/or the like.

Further, via compression of the non-woven layer, a composite formed from the stack can assume any one of a range of thicknesses. Such functionality can facilitate use of the composite in a wider range of applications, allow for a wider range of other layer(s)-whose thickness(es) may be less critical due to thickness variability of the non-woven layer-to be included in the composite, and/or the like. Such thickness variability can also facilitate use of the composite in processes that are sensitive to composite thickness, such as injection overmolding. To illustrate, during injection overmolding, injection molding material can be injected into a mold containing a composite so as to overmold the composite. If the composite is too thick or too thin, however, excessive (and potentially mold-damaging) flashing may occur, whether between mold portions of the mold or between the composite and one(s) of the mold portions, the bond between the composite and the injection molding material may be substandard, the overmolded part may be aesthetically displeasing, and/or the like. A composite that includes a non-woven layer can expand or compress (bounded by the mold) to assume a thickness that mitigates these issues.

In stack 10, each of the layers of core 14 is non-woven. In other stacks, however, a core can include-in addition to one or more non-woven layers-layer(s) that are not non-woven, such as, for example, woven and/or unidirectional fiber-reinforced layer(s), film(s), foam layer(s) (porous and/or non-porous), honeycomb layer(s), and/or the like. And, the presence of such not non-woven layer(s) does not prevent such a core from being characterized as including a stack of non-woven layer(s).

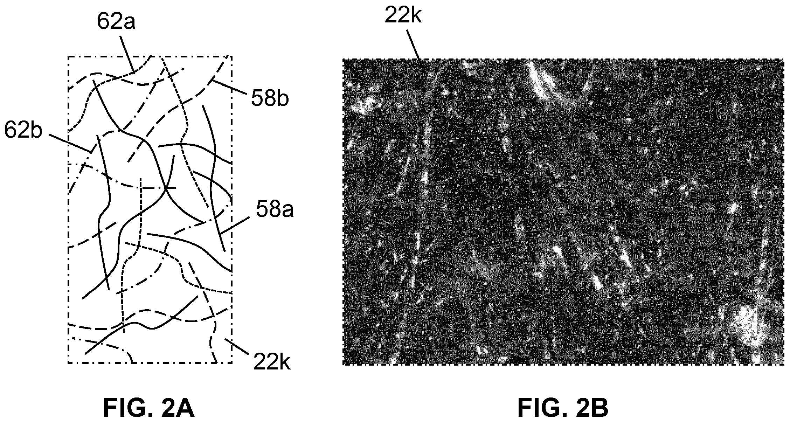

Referring additionally to FIGs. 2A and 2B, provided by way of illustration is a non-woven layer 22k that is usable in some of the present stacks. For example, at least one of, up to and including each of, non-woven layers 22a-22j of stack 10 can be a layer 22k. Fibers of layer 22k, as with other non-woven layers of the present stacks, can be of one or more of a variety of types, each of which can contribute to the layer's properties. For example, fibers of a non-woven layer can include resin fibers, which are those that each comprise at least a majority, by weight, of a resin material, sometimes referred to as a core material (e.g., a thermoplastic material). As used herein, if a structure "comprises at least a majority, by weight," of a material, at least 50% of the weight of that structure is due to the material, where "at least 50%" encompasses-and may, in some instances, be substituted with-at least 55, 60, 65, 70, 75, 80, 85, 90, or 95% or 100%. For further example, a non-woven layer can include reinforcing fibers, which are those that have a modulus of elasticity that is greater than approximately 8.5 gigapascals (GPa) (e.g., greater than or approximately equal to any one of, or between any two of: 8.5, 10.0, 15.0, 20.0, 25.0, 30.0, 35.0, 40.0, 45.0, or 50.0 GPa).

Resin fibers and reinforcing fibers may be distinguished by their response to consolidation: resin fibers may be capable of melting-and may, depending on the transition temperature (defined below) of their resin material as well as consolidation parameters, actually melt-such that they are no longer fibers and form a matrix material within which other fibers are dispersed, and reinforcing fibers may remain as fibers. While resin fibers are often organic, meaning each comprises a majority, by weight, of an organic compound, and reinforcing fibers are often inorganic, meaning each comprises a majority, by weight, of an inorganic compound, there are exceptions; for example, aramid fibers and many cellulosic fibers are organic reinforcing fibers. As used herein, an "organic compound" is one that includes a hydrogen-carbon bond, and an "inorganic compound" is one that does not.

In general, resin fibers of a non-woven layer can facilitate bonding between the non-woven layer and other layer(s), and reinforcing fibers of a non-woven layer can add strength and stiffness to the non-woven layer. Further, resin fibers and reinforcing fibers-depending on their materials and dimensions, as described below-can each increase the resiliency of a non-woven layer (the ability of the layer, after deformation by a load, to return itself to its pre-deformed shape once the load is removed, which, if increased, can mean that the layer is able to return itself to its pre-deformed shape after larger such deformations), increase the strength and/or drapability of the layer when the layer is heated, resist lateral flow of resin material through the layer during consolidation, and/or the like.

To illustrate, layer 22k can include a first set of resin fibers 58a. Resin fibers 58a can facilitate bonding between layer 22k and other layer(s) in a stack (e.g., 10), including skin (e.g., 18a and/or 18b) and/or core (e.g., 14) layer(s) thereof. For example, the resin material of resin fibers 58a can have a transition temperature that is less than or approximately equal to, for at least one other of the layers, a transition temperature of a matrix material of the other layer (if the other layer is unidirectional or woven fiber-reinforced, described below) or of the resin material of resin fibers of the other layer (if the other layer is a non-woven layer). In this way, when layer 22k and the other layer are pressed together and heated to or above the transition temperature of the matrix material or the resin material of resin fibers of the other layer, resin fibers 58a of layer 22k can bond with the matrix material or the resin material of resin fibers of the other layer, thus bonding the layers.

The definition of a material's "transition temperature" depends on whether the material is amorphous or semi-crystalline: if the material is amorphous, the transition temperature is the material's glass transition temperature, and, if the material is semi-crystalline, the transition temperature is the material's melting temperature. Exemplary amorphous materials include polycarbonate (PC), polymethyl methacrylate (PMMA), polystyrene (PS), polyvinyl chloride (PVC), and polyethyleneimine or polyetherimide (PEI), and exemplary semi-crystalline materials include polyethylene (PE), polypropylene (PP), polybutylene terephthalate (PBT), polyethylene terephthalate (PET).

Provided by way of illustration, the transition temperature of the resin material of resin fibers 58a can be less than or approximately equal to any one of, or between any two of: 90, 100, 110, 120, 130, 140, 150, 160, 170, 180, 190, 200, 210, 220, 230, 240, 250, 260, 270, 280, 290, 300, or 310 degrees Celsius (°C) (e.g., between approximately 100 °C and approximately 300 °C or approximately 105 °C).

In layer 22k, the resin material of resin fibers 58a is PC. In other non-woven layers, however, the resin material of resin fibers can be a different thermoplastic material, such as, for example, PET, PBT, poly(1,4-cyclohexylidene cyclohexane-1,4-dicarboxylate) (PCCD), glycol-modified polycyclohexyl terephthalate (PCTG), poly(phenylene oxide) (PPO), polypropylene (PP), polyethylene (PE), PVC, PS, PMMA, PEI or a derivative thereof, a thermoplastic elastomer (TPE), a terephthalic acid (TPA) elastomer, poly(cyclohexanedimethylene terephthalate) (PCT), polyethylene naphthalate (PEN), a polyamide (PA), polystyrene sulfonate (PSS), polyether ether ketone (PEEK), polyether ketone ketone (PEKK), polyphenylene sulfide (PPS), a copolymer thereof, or a blend thereof.

In some non-woven layers, the resin material of resin fibers can include a flame retardant, such as, for example, a phosphate structure, resorcinol bis(diphenyl phosphate), a sulfonated salt, halogen, phosphorous, talc, silica, a hydrated oxide, a brominated polymer, a chlorinated polymer, a phosphorated polymer, a nanoclay, an organoclay, a polyphosphonate, a poly[phosphonate-co-carbonate], a polytetrafluoroethylene and styrene-acrylonitrile copolymer, a polytetrafluoroethylene and methyl methacrylate copolymer, and/or a polysiloxane copolymer.

Resin fibers 58a can each have dimensions selected to increase the resiliency of layer 22k. For example, each of resin fibers 58a can have a length that is greater than or approximately equal to any one of, or between any two of: 450, 500, 550, 600, 650, 700, 750, 800, 850, 900, 950, 1000, or 1050 times a diameter of the resin fiber (e.g., between approximately 500 and approximately 1000 times a diameter of the resin fiber). To illustrate, for each of resin fibers 58a: (1) the length can be greater than or approximately equal to any one of, or between any two of: 5, 10, 15, 20, 25, 30, 35, 40, 45, 50, 55, 60, 65, 70, or 75 millimeters (mm) (e.g., between approximately 5 mm and approximately 75 mm or between approximately 5 mm and approximately 25 mm); and/or (2) the diameter can be less than or approximately equal to any one of, or between any two of: 10, 15, 20, 25, 30, 35, 40, 45, 50, 55, 60, 65, 70, or 75 micrometers ($\mu$m) (e.g., between approximately 15 $\mu$m and approximately 42 $\mu$m).

Resin fibers that are longer may be capable of larger elastic deformations than and may extend farther (individually) within a non-woven layer than would other resin fibers that, though otherwise similar, are shorter; in at least this way, resin fibers 58a having one of the above length to diameter ratios may provide increased resiliency to layer 22k than would such other resin fibers.

In a non-woven layer (e.g., 22k), the lengths of fibers-including resin fibers and reinforcing fibers-can depend, in part, on the method used to produce the non-woven layer. To illustrate, if the non-woven layer was produced using a wet-laid process in which the fibers are connected using a binder, the fibers may be shorter, and, if the non-woven layer was produced using an air-laid process in which the fibers are connected via entanglement, the fibers may be longer to promote such entanglement.

Provided by way of illustration, each of resin fibers 58a can be greater than or approximately equal to any one of, or between any two of: 1.5, 2.0, 3.0, 4.0, 5.0, 6.0, 7.0, 8.0, 9.0, 10.0, 11.0, 12.0, 13.0, 14.0, 15.0, or 16.0 denier per filament ("denier") (e.g., between approximately 2 denier and approximately 15 denier or approximately 2 denier).

Layer 22k, as with other non-woven layers of the present stacks, can include a second set of resin fibers 58b in addition to (e.g., entangled with or otherwise in contact with) resin fibers 58a, where the resin material of resin fibers 58b is distinct from that of resin fibers 58a. While the resin material of resin fibers 58a can be selected to facilitate bonding between layer 22k and other layer(s) in a stack (e.g., 10), the resin material of resin fibers 58b can be selected to promote stability of layer 22k (e.g., during draping, overmolding, consolidation, and/or the like) and/or resiliency of layer 22k (e.g., in both instances, even if resin fibers 58a have melted). For example, the resin material of resin fibers 58b can have a higher transition temperature and/or a higher viscosity than that of the resin material of resin fibers 58a.

To illustrate, the transition temperature of the resin material of resin fibers 58a can be at least or approximately equal to any one of, or between any two of: 5, 10, 15, 20, 25, 30, 35, 40, 45, 50, or 55% lower (e.g., at least 10% lower, at least 25% lower, between approximately 10% and approximately 50% lower, or between approximately 10% and approximately 25% lower) than the transition material of the resin material of resin fibers 58b. As used herein, a first value being at least percentage lower or higher than a second value means that the first value is equal to or less than the second value minus that percentage of the second value (in the former instance), or equal to or greater than the second value plus that percentage of the second value (in the latter instance). A non-limiting value for the transition temperature of resin fibers 58b is one that is greater than or approximately equal to any one of, or between any two of: 190, 200, 210, 220, 230, 240, 250, 260, 270, 280, 290, 300, or 310 °C (e.g., between approximately 200 °C and approximately 300 °C, between approximately 200 °C and approximately 250 °C, or approximately 217 °C).

To further illustrate, the low-shear viscosity of the resin material of resin fibers 58a can be at least or approximately equal to any one of, or between any two of: 5, 10, 15, 20, 25, 30, 35, 40, 45, 50, 55, 60, 65, 70, 75, 80, 85, or 90% lower (e.g., at least 10% lower, at least 50% lower, between approximately 25% and approximately 90% lower, between approximately 50% and approximately 90% lower, or between approximately 75% and approximately 90% lower) than the low-shear viscosity of the resin material of resin fibers 58b. As used herein, a material's "low-shear viscosity" is the material's (when flowable) viscosity measured at a shear rate of between 0.1 and 1 hertz, inclusive, using a shear rheometer. And, low-shear viscosities of materials that are herein compared to one another-such as a low-shear viscosity of a first material being a percentage lower than a second material's low-shear viscosity-are measured using the same shear rheometer at substantially the same shear rate.

In either or both of these ways, when layer 22k is heated-even to or above the transition temperature of the resin material of resin fibers 58a or of the resin material of resin fibers 58b-resin fibers 58b, via their increased resistance to melting and/or flowing, can: (1) resist lateral flow of resin material-such as that from melted resin fibers 58a-through layer 22k, thereby facilitating consolidation of the stack and use of higher consolidation temperatures and pressures; (2) promote stability of layer 22k, thereby mitigating undesired movement of layer 22k relative to other layer(s) in its stack (e.g., 10) and/or fibers of layer 22k relative to one another during draping and/or overmolding of a composite formed from the stack; and/or (3) promote resiliency of layer 22k (e.g., even once resin fibers 58a have melted).

In layer 22k, the resin material of resin fibers 58b is PEI. Nevertheless, in other non-woven layers that include first and second sets of resin fibers having distinct resin materials, the resin material of the second set of resin fibers can be a different thermoplastic material, such as, for example, PET, PC, PBT, PCCD, PCTG, PPO, a derivative of PEI, PCT, PEN, a PA, PSS, PEEK, PEKK, PPS, a copolymer thereof, or a blend thereof. In any instance, the resin material of such a second set of resin fibers (including of resin fibers 58b) can comprise a flame retardant, such as, for example, any of the flame retardants described above.

Resin fibers 58b can each have one or more of the dimensions described above for resin fibers 58a-including such a length to diameter ratio, length, diameter, and/or dernier-and such dimension(s) for resin fibers 58b can provide the same advantages as described for resin fibers 58a. To illustrate, each of resin fibers 58b can: (1) have a length that is between approximately 500 and approximately 1000 times the diameter of the resin fiber; (2) have a length that is between approximately 5 mm and approximately 75 mm or between approximately 5 mm and approximately 25 mm; (3) have a diameter of between approximately 15 $\mu$m and approximately 42 $\mu$m; and/or (4) be between approximately 2 denier and approximately 10 denier (e.g., approximately 2 denier).

Layer 22k-and other non-woven layers of the present stacks-can include a first set of reinforcing fibers 62a (e.g., entangled with or otherwise in contact with resin fibers 58a and resin fibers 58b). In layer 22k, reinforcing fibers 62a comprise carbon fibers and serve primarily to increase the strength and stiffness of the layer. In other layers, however, such reinforcing fibers can comprise any suitable fiber-type, including, for example, aramid ("aramid" includes para-aramid), ceramic, basalt, cellulosic, or liquid crystal polymer. And, depending on their type, such reinforcing fibers can-in addition to increasing the strength and stiffness of their layer-promote resilience of their layer (described below).

Provided by way of illustration, reinforcing fibers 62a can have a diameter that is greater than or approximately equal to any one of, or between any two of: 5, 10, 15, 20, 25, or 30 $\mu$m (e.g., between approximately 5 $\mu$m and approximately 20 $\mu$m or between approximately 5 $\mu$m and approximately 10 $\mu$m).

As with other non-woven layers of the present stacks, layer 22k can include a second set of reinforcing fibers 62b in addition to reinforcing fibers 62a (e.g., entangled with or otherwise in contact with resin fibers 58a and 58b and reinforcing fibers 62a), where the fiber-type of reinforcing fibers 62b is distinct from that of reinforcing fibers 62a. For example, reinforcing fibers 62b can comprise aramid fibers. While not as stiff as certain types of reinforcing fibers, such as carbon fibers, aramid fibers are sufficiently stiff (e.g., having a modulus of elasticity of between approximately 50 GPa and approximately 200 GPa) to stiffen their layer.

And, aramid fibers may be more resilient than certain types of reinforcing fibers, such as carbon fibers. Thus, by including aramid fibers-whether as a first set of reinforcing fibers (e.g., 62a) or, if present, a second set of reinforcing fibers (e.g., 62b)-a non-woven layer can increase the compliance of its composite, be more capable of encouraging a uniform application pressure to its stack when the stack is pressed during consolidation, and/or provide its composite with enhanced thickness variability. Notably, aramid fibers can have a high resistance to melting and thermal degradation generally; therefore, resiliency (and other benefits) provided by aramid fibers to its layer may persist even after consolidation and/or forming. Nevertheless, in other non-woven layers that include first and second sets of reinforcing fibers having distinct fiber-types, the second set of reinforcing fibers can comprise a different fiber-type, including, for example, carbon, ceramic, basalt, cellulosic, or liquid crystal polymer.

The present non-woven layers can each include any suitable amount of resin fibers (considering each of its set(s) of resin fibers collectively) and any suitable amount of reinforcing fibers (considering each of its set(s) of reinforcing fibers collectively). For example, a non-woven layer can include greater than or approximately equal to any one of, or between any two of: 25, 30, 35, 40, 45, 50, 55, 60, 65, 70, 75, 80, or 85% (e.g., between approximately 30% and approximately 80%, or approximately 60%) of such resin fibers, by weight. And, if the layer includes first and second sets of resin fibers having differing resin materials (e.g., 58a and 58b, respectively), that weight percentage can be divided amongst the first and second sets of resin fibers in any suitable fashion. To illustrate, the layer can include: (1) greater than or approximately equal to any one of, or between any two of: 5, 10, 15, 20, 25, or 30% (e.g., between approximately 5% and approximately 25%, between approximately 5% and approximately 15%, or approximately 10%) of the first set of resin fibers (e.g., lower transition temperature and/or lower viscosity resin fibers), by weight; and/or (2) greater than or approximately equal to any one of, or between any two of: 30, 35, 40, 45, 50, 55, or 60% (e.g., between approximately 45% and approximately 50%, or approximately 50%) of the second set of resin fibers (e.g., higher transition temperature and/or higher viscosity resin fibers), by weight.

For further example, a non-woven layer can include greater than or approximately equal to any one of, or between any two of: 25, 30, 35, 40, 45, 50, 55, 60, 65, 70, 75, 80, or 85% (e.g., between approximately 30% and approximately 80%, or approximately 40%) of such reinforcing fibers, by weight. And, if the layer includes first and second sets of reinforcing fibers having differing fiber-types (e.g., 62a and 62b, respectively), that weight percentage can be divided amongst the first and second sets of reinforcing fibers in any suitable fashion. To illustrate, the layer can include: (1) greater than or approximately equal to any one of, or between any two of: 5, 10, 15, 20, 25, 30, or 35% (e.g., between approximately 5% and approximately 30%, or approximately 15%) of the first set of reinforcing fibers (e.g., carbon fibers, or higher modulus of elasticity and/or lower resilience reinforcing fibers), by weight; and/or (2) greater than or approximately equal to any one of, or between any two of: 15, 20, 25, 30, or 35% (e.g., between approximately 20% and approximately 30%, or approximately 25%) of the second set of reinforcing fibers (e.g., aramid fibers, or lower modulus of elasticity and/or higher resilience reinforcing fibers), by weight.

The present non-woven layers can include one or more of any of set of resin fibers described herein and one or more of any set of reinforcing fibers described herein. For example, some non-woven layers may include: (1) a first such set of resin fibers and a first such set of reinforcing fibers, but neither a second set of resin fibers having a resin material distinct from that of the first set of resin fibers, nor a second set of reinforcing fibers having a fiber-type distinct from that of the first set of reinforcing fibers; (2) first and second such sets of resin fibers-having distinct resin materials-and a first such set of reinforcing fibers, but not a second set of reinforcing fibers having a fiber-type distinct from that of the first set of reinforcing fibers; or (3) a first such set of resin fibers and first and second such sets of reinforcing fibers (having distinct fiber-types), but not a second set of resin fibers having a resin material distinct from that of the first set of resin fibers.

The present non-woven layers can have any suitable grammage, including, for example, one that is greater than or approximately equal to any one of, or between any two of: 40, 50, 60, 70, 80, 90, 100, 110, 120, 130, 140, 150, 160, 170, 180, 190, 200, or 210 (e.g., between approximately 50 and approximately 200, or approximately 60) gams per square meter (gsm).

While core 14 of stack 10 includes 10 non-woven layers 22k; other stacks can each include a core having any suitable non-woven layer(s), including one or more of any non-woven layer described herein, arranged in any suitable layup (whether symmetric or asymmetric).

Returning to FIGs. 1A-1C, skins 18a and 18b are each coupled to core 14 such that the skin covers at least a portion-up to and including all of-a respective one of upper surface 26a and lower surface 26b of the core. As used herein, a skin can "cover" at least a portion of an upper surface or a lower surface of a core even if one or more layers (other than those of the core) are disposed between the skin and that surface portion of the core. In stack 10, skins 18a and 18b each include two layers, 30a and 30b for skin 18a, and 30c and 30d for skin 18b; however, in other stacks, each of the skin(s) (some stacks may include only one skin) can include any suitable number of layers, such as, for example, 1, 2, 3, 4, 5, or more layers, and in stacks having two skins, the skins can-but need not-include the same number of layers.

In the each of skins 18a and 18b, each of the layers can have dimensions that are substantially the same as those of each other of the layers. For example, the layers of a skin can each have substantially the same length and width (e.g., measured along directions 38 and 42, respectively, in FIG. 1A). For further example, each of the layers of skin can, but need not, have substantially the same thickness (e.g., 74, shown for layer 30a of skin 18a). For yet further example, the layers of a skin can each have substantially the same maximum planform area. Nevertheless, in other stacks, each of the layers of a skin can have varying dimensions, including lengths, widths, thickness, and/or maximum planform areas.

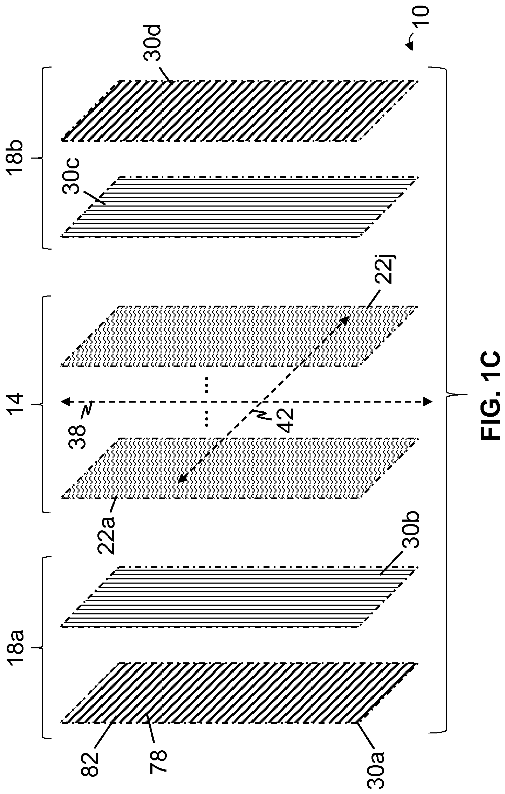

The layers of skins 18a and 18b are fiber-reinforced, each including fibers 78 dispersed within a polymeric material 82 (sometimes referred to as a skin material) (FIG. 1C). In the present stacks (e.g., 10), fibers (e.g., 78) can include any suitable fibers, including those having any of the fiber-types described herein (e.g., carbon fibers), and, in such a stack, the fibers can-but need not-have the same fiber-type in each of its skin layer(s) (e.g., 30a-30d). And, in each of the present stacks (e.g., 10), a polymeric material (e.g., 82)-which may or may not be the same for each of its skin layer(s) (e.g., 30a-30d)-can comprise any suitable polymeric material, including any of the thermoplastic (e.g., PC) materials described herein, provided that the polymeric material of at least the one(s) of the skin layer(s) closest to its core (e.g., 14) comprises a same polymeric material, or a polymeric material that is chemically-compatible with, the resin material of at least one of the set(s) of resin fibers (e.g., 58a and/or 58b) of the core, such that those skin layer(s) can bond with the core during consolidation of the stack. Preferably, the polymeric material of at least the one(s) of the skin layer(s) closest to the core has a transition temperature that is approximately equal to or is less than the transition temperature of the resin material of at least one of the set(s) of resin fibers (e.g., to facilitate such bonding). Such a polymeric material (e.g., 82) can include a flame retardant, such as, for example, any of the flame retardants described herein. In each of the present stacks (e.g., 10), at least one of (e.g., each of) its skin layer(s) (e.g., 30a-30d) can have a fiber volume fraction that is greater than or approximately equal to any one of, or between any two of: 25, 30, 35, 40, 45, 50, 55, 60, 65, 70, or 75% (e.g., between approximately 30% and approximately 70%). In some of the present stacks, one or more layers of at least one of the skin(s) may not include fibers; such a layer can, for example, comprise a film of polymeric material (e.g., 82).

In stack 10, each of the layers of each of skins 18a and 18b is a unidirectional layer, fibers 78 of which are aligned in a single direction as understood by a person of ordinary skill in the art. More particularly, for each of these layers, fibers 78 are either aligned with the width of stack 10 (e.g., measured in direction 42) (e.g., layers 30a and 30d, each of which may be characterized as a 90-degree unidirectional layer), or the length of the stack (e.g., measured in direction 38) (e.g., layers 30b and 30c, each of which may be characterized as a 0-degree unidirectional layer).

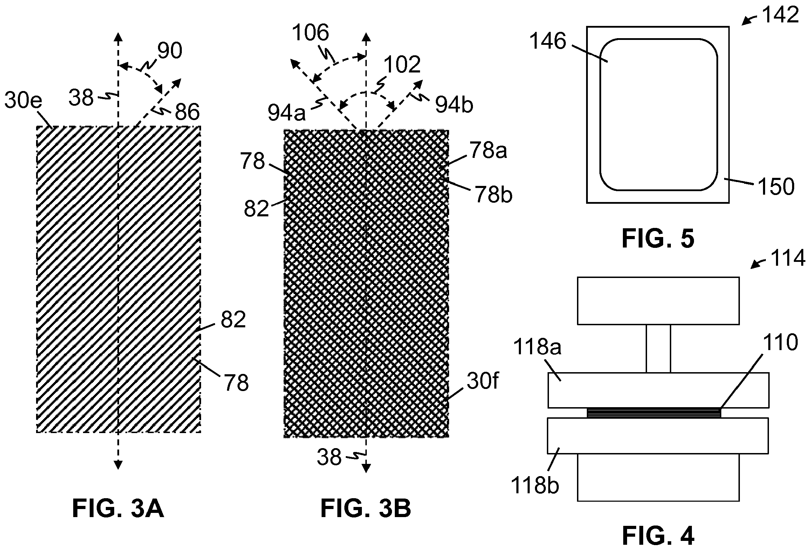

In other stacks, the skin(s) can include unidirectional layer(s) having fibers aligned in any suitable direction. For example, and referring additionally to FIG. 3A, unidirectional layer 30e-which may be suitable for use as a skin layer in some of the present stacks-includes fibers 78 aligned in a direction 86, and a smallest angle 90 between direction 86 and a length (e.g., measured in direction 38) of a stack including layer 30e can be greater than or approximately equal to any one of, or between any two of: 0, 5, 10, 15, 20, 25, 30, 35, 40, 45, 50, 55, 60, 65, 70, 75, 80, 85, or 90 degrees.

In some of the present stacks, at least one of the skin layer(s) can include fibers 78 that define a woven structure (e.g., as in a layer having a plane, twill, satin, basket, leno, mock leno, or the like weave). For example, and referring additionally to FIG. 3B, layer 30f-which may be suitable for use as a skin layer in some of the present stacks-includes a first set of fibers 78a aligned in a first direction 94a and a second set of fibers 78b aligned in a second direction 94b that is angularly disposed relative to the first direction, where the first set of fibers is woven with the second set of fibers. A smallest angle 102 between first direction 94a and second direction 94b can be greater than or approximately equal to any one of, or between any two of: 10, 15, 20, 25, 30, 35, 40, 45, 50, 55, 60, 65, 70, 75, 80, 85, or 90 degrees. And, a smallest angle 106 between first direction 94a and a length (e.g., measured in direction 38) of a stack including layer 30f can be greater than or approximately equal to any one of, or between any two of: 0, 5, 10, 15, 20, 25, 30, 35, 40, 45, 50, 55, 60, 65, 70, 75, 80, 85, or 90 degrees.

In stack 10, the layers of core 14 and skins 18a and 18b are arranged in a [0, 90, core, 90, 0] layup. In other stacks, the respective skin(s) can each include any suitable skin layer(s), including one or more of any skin layer described above, arranged with the respective cores in any suitable layup, whether symmetric or asymmetric.

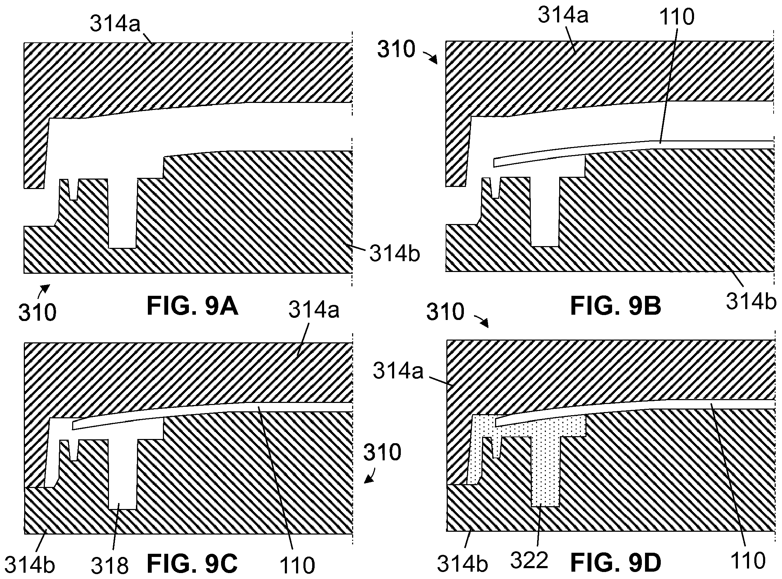

Referring now to FIG. 4, each of the present stacks (e.g., 10) can be consolidated by, for example, applying heat and pressure to the stack, thereby forming a composite (e.g., 110). To illustrate, such heat and pressure can be applied to the stack by pressing it between pressing elements, such as platens of a static press (e.g., platens 118a and 118b of FIG. 4's press 114), belts of a double-belt press, rollers, and/or the like, injecting injection molding material into a mold (e.g., mold 310, FIGs. 9A-9D) that contains the stack, and/or the like. Such a composite can be characterized as a stack of layers (including a core stack and skin stack(s)), notwithstanding that those layers are bonded to one another.

During consolidation of a stack (e.g., 10), at least some of the resin fibers of its non-woven layer(s) (e.g., 22k), such as those from a first set of resin fibers (e.g., 58a) and/or a second set of resin fibers (e.g., 58b), will melt, and, depending on the amount of heat and pressure applied to the stack, may melt to an extent that they are no longer fibers. To illustrate, a post-consolidation non-woven layer can be characterized as including a matrix material that comprises the resin material from a first set of resin fibers (e.g., 58a) that are no longer fibers, within which its set(s) of reinforcing fibers, such as those from a first set of reinforcing fibers (e.g., 62a) and/or a second set of reinforcing fibers (e.g., 62b) are dispersed. If, before consolidation, that layer included a second set of resin fibers (e.g., 58b) (e.g., having a resin material with a higher transition temperature and/or a higher viscosity than that of the first set of resin fibers), the resin material from the second set of resin fibers can be dispersed within the matrix material in regions, which can be fibers (or melted fibers) from the second set of resin fibers and/or regions that are not fibers (depending on the degree to which the second set of resin fibers has melted). For each of these regions, at least a majority of (up to and including all of) its surface area can be in contact with the matrix material. In some instances, the matrix material can be characterized as including such regions.

A post-consolidation non-woven layer can have any suitable weight percentage(s) of its resin material(s), including, for each such resin material, any weight percentage of a set of resin fibers having that resin material described above for a pre-consolidation non-woven layer. To illustrate, a post-consolidation non-woven layer can include: (1) greater than or approximately equal to any one of, or between any two of: 5, 10, 15, 20, 25, or 30% (e.g., between approximately 5% and approximately 25%, between approximately 5% and approximately 15%, or approximately 10%) of a resin material described above as a resin material of a first set of resin fibers (e.g., 58a); and/or (2) greater than or approximately equal to any one of, or between any two of: 30, 35, 40, 45, 50, 55, or 60% (e.g., between approximately 45% and approximately 50%, or approximately 50%) of a resin material described above as a resin material of a second set of resin fibers (e.g., 58b). And, a non-woven layer can have substantially the same weight percentage(s) of its set(s) of reinforcing fibers pre- and post-consolidation.

The present stacks (e.g., 10) and composites (e.g., 110) can each have any suitable thickness (e.g., 122, shown for stack 10 in FIG. IB), such as, for example, one that is less than or approximately equal to any one of, or between any two of: 5.00, 4.50, 4.00, 3.50, 3.00, 2.50, 2.25, 2.00, 1.75, 1.50, 1.25, 1.00, 0.75, 0.50, or 0.25 mm (e.g., between approximately 2.00 mm and approximately 0.50 mm, or approximately 1.00 mm). And, its core (e.g., 14) can account for greater than or approximately equal to any one of, or between any two of: 25 30, 35, 40, 45, 50, 55, 60, 65, 70, 75, or 80% (e.g., between approximately 30% and approximately 70% of that thickness).

Referring now to FIG. 5, shown is an article 142 including one of the present composites 146 (which can be any of the composites described herein, including composite 110). Article 142 can be any suitable article, such as, for example, a frame, beam, plate, panel, automobile-car or truck-component (e.g., door, hood, bumper, cross beam, A-, B-, C-, or D-pillar, engine cover, battery casing, seat structure, or the like), an interior and/or exterior side, floor, or roof panel, door, or the like of a trailer, bus, train, airplane, or boat, other bus or train component (e.g., window frame or the like), other airplane component (e.g., wing, body, tail, stabilizer, window frame, or the like), other boat component (e.g., hull, deck, window frame, or the like), electronic device housing ("housing," as used herein, encompasses a frame) (e.g., hard disk or solid state drive housing, display-such as a television or monitor-frame, or the like), PED housing (e.g., laptop, tablet, mobile phone, portable music player, and/or the like housing), and/or the like, including a portion-rather than the entirety-of any of the above. While article 142 is shown as including one composite 146, article 142 (and others) can include any suitable number of the present composites, such as, for example, 1, 2, 3, 4, 5, or more composites.

Article 142 can include a body 150 coupled to composite 146. Body 150 can: (1) facilitate attachment of the article to a structure by, for example, defining one or more holes, protrusions, clips, fasteners, lips, ridges, recesses, and/or the like; (2) protect composite 146 by, for example, surrounding and/or encapsulating at least a portion of the composite; and/or (3) strengthen and/or stiffen article 142 via its material and/or structure (e.g., the body can define ribs that extend along the composite). Body 150 can comprise any suitable material, such as, for example, a polymeric material (including any described herein), a metal (e.g., aluminum, magnesium, iron, an alloy thereof, such as steel, and/or the like), and/or the like. And, body 150 can be coupled to composite 146 in any suitable fashion, which suitability may depend on the material of the body. To illustrate, if body 150 comprises a polymeric material, the body can be molded onto composite 146 (e.g., via overmolding, compression molding, or the like), and, if the body comprises a polymeric material, a metal, and/or the like, the body can be coupled to the composite via an adhesive, one or more fasteners, interlocking features of the body and the composite, and/or the like. Some articles may not include such a body; for example, such articles can consist of one or more composites.

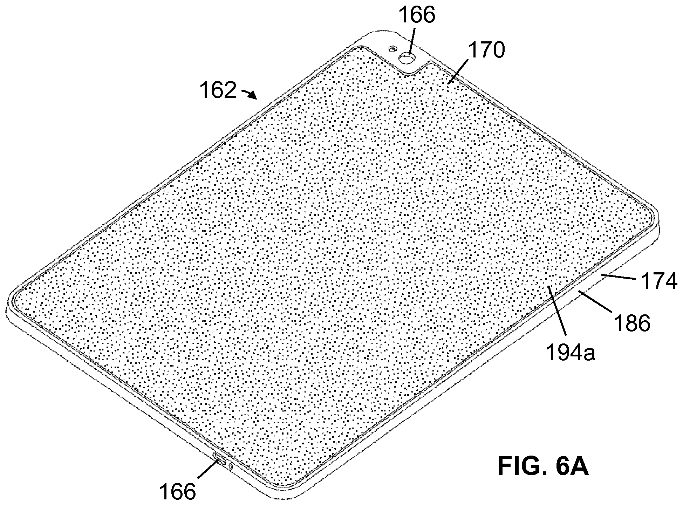

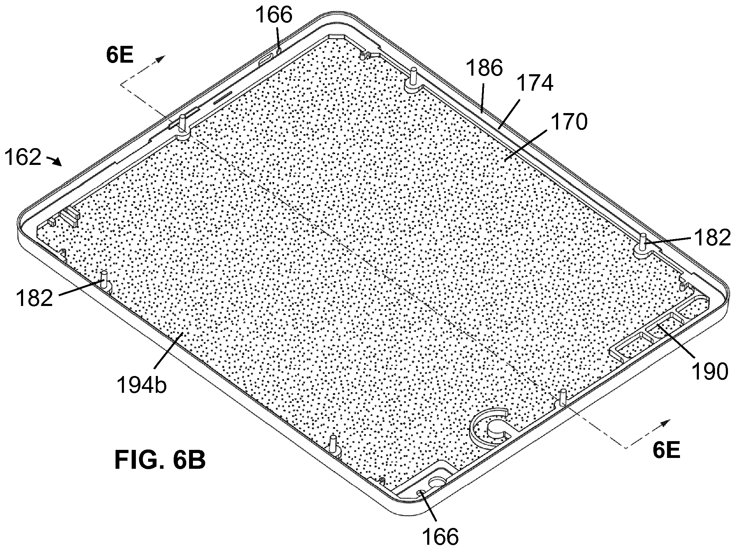

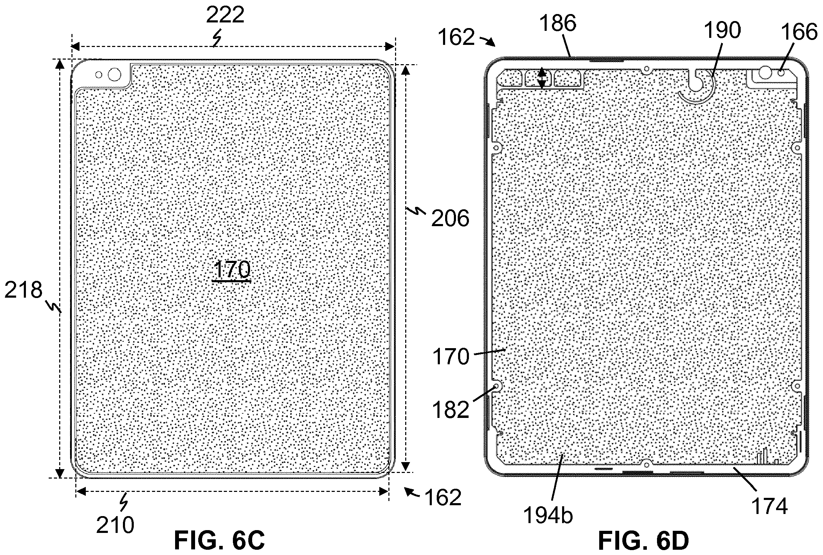

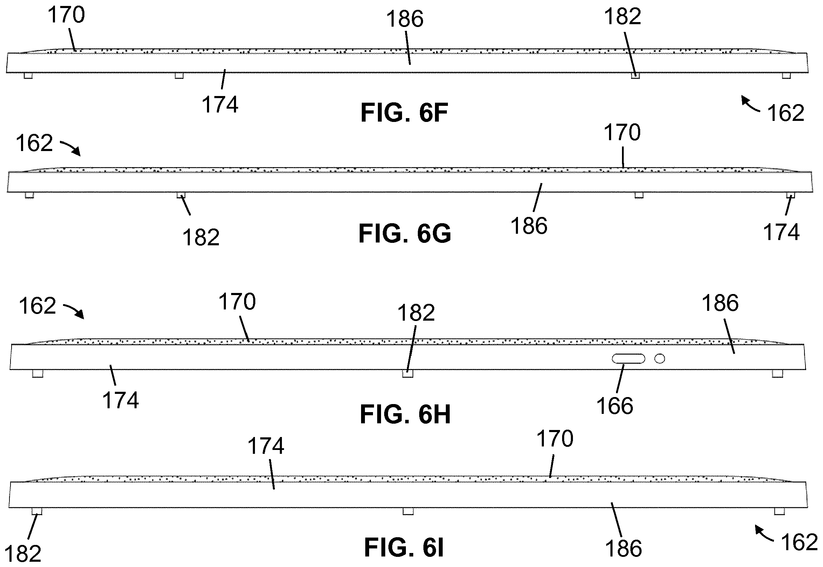

Referring now to FIGs. 6A-6I, shown is an exemplary one of the present articles: tablet housing panel 162. As shown, panel 162 can be a back panel of the housing that, when coupled to a front panel of the housing (not shown), defines a portion of an interior volume of the housing within which tablet components, such as, for example, one or more processors, memories, boards, screens, user-input devices, batteries, other devices (e.g., cameras), and/or the like, can be disposed. While panel 162 is shown as a separable piece of its housing, other panels can be unitary with other portions-including the entireties-of their housings; such a unitary construction does not negate the characterization of such a panel as a panel.

Panel 162 can define one or more openings 166 that, when panel 162 is coupled to the front panel, communicate with the interior volume. Such an opening can facilitate operation of a tablet component disposed within the interior volume by, for example, allowing a cable (e.g., a USB cable) and/or a peripheral device-such as a keyboard, mouse, set of headphones, set of speakers, battery charger, and/or the like-to be connected to that component, permitting a user's use of that component (e.g., if the component is a camera), increasing airflow to and thereby cooling that component, and/or the like.

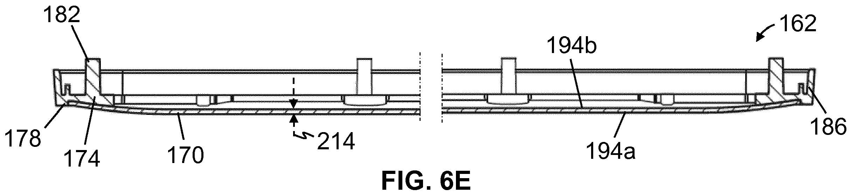

Panel 162 includes a composite plate 170 (an exemplary composite 146) and a frame 174 (an exemplary body 150) coupled to the plate. Plate 170 can be any of the composites described herein, including composite 110. In panel 162, plate 170 is disposed within frame 174. For example, frame 174 can abut at least a majority of-up to and including all of-a peripheral edge 178 of the plate (FIG. 6E). In addition to securing plate 170 relative to frame 174, such abutment can protect the edge of the plate, where the plate may be most susceptible to fraying or delamination, prevent a user from contacting the edge of the plate, which may be sharp, and/or the like. Nevertheless, in other panels, a frame can be coupled to a plate in any suitable fashion, including one in which the frame abuts less than a majority of-including none of-a peripheral edge of the plate.

Frame 174 can include features for attaching panel 162 to other portions of the housing, such as the front panel. For example, frame 174 can define one or more protrusions 182 and/or one or more recesses, where each of the protrusion(s) can be received within a recess of and/or each of the recesse(s) can receive a protrusion of, another portion of the housing to couple panel 162 to that portion. Illustrative protrusions include pins (as shown), tabs, clips, and the like, and illustrative recesses include those for receiving pins, tabs, or clips, those of bosses, and the like. Of course, panel 162 can be coupled to another portion of the housing-whether or not the panel includes such protrusion(s) and/or recess(es)-in other ways, such as via one or more fasteners, adhesive, welding, and/or the like.

To stiffen panel 162, frame 174 can define one or more ribs 190 that extend from plate 170. Due, at least in part, to the stiffness of plate 170, such rib(s) 190-if present-need not be extensive. For example, a continuous-meaning traversable without crossing over any of rib(s) 190-area of each of an upper surface 194a and/or a lower surface 194b of plate 170 can be greater than or approximately equal to any one of, or between any two of: 50, 60, 70, 80, or 90% of the total area of that surface. At least by reducing the presence of rib(s) 190, panel 162 can have a reduced thickness, provide more space for tablet components within the housing, and/or the like.

As depicted, panel 162 includes a peripheral lip 186 that projects away from, but is not necessarily in contact with, plate 170. Lip 186 can facilitate attachment of panel 162 to other portions of the housing, stiffen the panel, enclose the interior volume of the housing, and/or the like. In panel 162, lip 186 is defined by frame 174; however, in other panels, such a lip can be defined, at least in part, by a composite plate.

In panel 162 (and others of the present panels), frame 174 may contact less than a majority of each of plate 170's upper surface 194a and/or lower surface 194b. To illustrate, for each of upper surface 194a and/or lower surface 194b, greater than or approximately equal to any one of, or between any two of: 55, 60, 65, 70, 75, 80, 85, 90, or 95% of that surface may not be in contact with frame 174. Such a configuration, which may be permitted by plate 170's stiffness, smooth surface finish (e.g., suitable for being exposed), and/or the like, can reduce panel 162's thickness, provide more space for tablet components within the housing, and/or the like.

Frame 174 of panel 162 comprises a polymeric material, such as, for example, any of the thermoplastic (e.g., PC) described herein, and may include any of the flame retardants described above. And, this polymeric material can include dispersed elements (e.g., discontinuous or short fibers, having any fiber-type described herein); such dispersed elements can account for between approximately 20% and approximately 60% of the polymeric material's weight. To facilitate a bond between frame 174 and plate 170, it is preferable that the frame's polymeric material include a same polymeric material as (or at least a polymeric material that is chemically-compatible with) that of the skin layer(s) of the plate and/or the resin material(s) in the core of the plate. In other panels, a frame can comprise a non-polymeric material, such as, for example, a metal (e.g., any metal described herein).

In panel 162, frame 174 is coupled to plate 170 by overmolding the frame onto the plate. Nevertheless, in other panels, a frame-whether or not comprising a polymeric material-can be coupled to a plate in any suitable fashion, including via adhesive, one or more fasteners, interlocking features of the frame and the plate, and/or the like.

Plate 170 can have any suitable length 206 and any suitable width 210 (measured perpendicularly to the length) (FIG. 6C). To illustrate, length 206 can be greater than or approximately equal to any one of, or between any two of: 1.0, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, or 3.0 times width 210; for example, the ratio of the length to the width can be approximately 3:2, 4:3, 5:3, 5:4, 16:9, or 16:10. A non-limiting value for length 206 is one that is greater than or approximately equal to any one of, or between any two of: 50, 60, 70, 80, 90, 100, 120, 140, 160, 180, 200, 220, 240, 260, 280, 300, 350, 400, 450, 500, 550 or 600 mm (e.g., approximately 250 mm). And, a non-limiting value for width 210 is any one specified for length 206 (e.g., approximately 100 mm). Finally, a thickness 214 of plate 170 can be any thickness specified above for a composite (e.g., approximately 1.00 mm).

Frame 174 can have a length 218 and a width 222 (FIG. 6C) that are approximately equal to length 206 and width 210, respectively, of plate 170. For example, length 218 and width 222 can be approximately equal to any one of, or between any two of: 110, 109, 108, 107, 106, 105, 104, 103, 102, or 101% of length 206 and width 210, respectively.

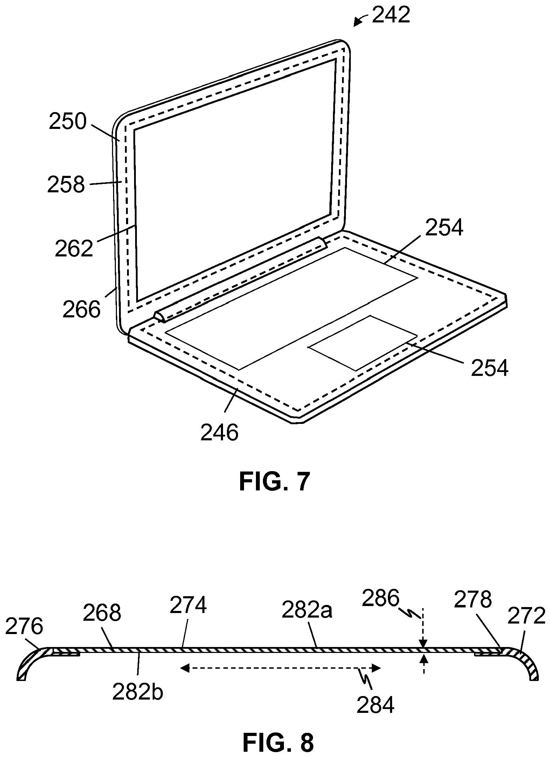

Referring now to FIG. 7, shown is a schematic perspective view of a laptop housing 242. Laptop housing 242 includes a base 246 and a lid 250 that can be movably (e.g., hingedly) coupled to the base. Each of base 246 and lid 250 can be characterized as a thin-walled shell configured to receive laptop components. For example, laptop components receivable by base 246 can include a processor, motherboard, power supply, user-input device(s) (e.g., a keyboard, touchpad, and/or the like), cooling fan(s), and/or the like. To facilitate operation of such laptop components once they are received by base 246, the base can define one or more openings 254 in communication with its interior (e.g., to allow user access to the user-input device(s), permit airflow to and/or from the cooling fan(s), allow external device(s) to be connected to the motherboard, and/or the like). Base 246 can comprise an assembly of two or more portions (e.g., an upper portion and a lower portion), to, for example, facilitate receipt of such laptop components by the base (e.g., during assembly of a laptop including the base).

Laptop components receivable by lid 250 can include a screen, user-input device(s) (e.g., a camera, microphone, and/or the like), and/or the like. For example, lid 250 can include a frame 258 defining an opening 262, where a laptop screen can be coupled to the frame such that the screen is viewable by a user through the opening. To increase the stiffness and strength of lid 250, facilitate receipt of a laptop screen by the lid, and/or for aesthetic purposes, the lid can include an A cover 266 (described in more detail below) configured to be coupled to frame 258. A cover 266 can be coupled to frame 258 in any suitable fashion, such as, for example, via interlocking features of the A cover and the frame (e.g., such as snap-fit connection(s)), fastener(s), adhesive, welding, and/or the like. In some aspects, an A cover (e.g., 266) of a lid (e.g., 250) can be unitary with a frame (e.g., 258) of the lid.

It is desirable for a laptop housing (e.g., 242) to be sufficiently stiff to protect components received by the laptop housing against damage as well as to be relatively small (e.g., thin-walled), light, and inexpensive. Some of the present laptop housings (e.g., 242) can achieve such advantageous characteristics by including one(s) of the present composites (e.g., 10). For example, in some of the present laptop housings (e.g., 242), composite(s) (e.g., 10) can be disposed within, on, and/or can form at least a portion of a panel of the laptop housing (e.g., a panel of a base 246 and/or a panel of a lid 250). To illustrate, in laptop housing 242, such composite(s) (e.g., 10) can be disposed within, on, and/or can form at least a portion of an upper panel and/or a lower panel of base 246 and/or lid 250 (generally indicated with dashed lines in FIG. 7).

To illustrate, and referring additionally to FIG. 8, shown is a cross-sectional side view of A cover 266. A cover 266 can include a planar portion 268 and a lip 272 that extends from and surrounds (but not necessarily completely) the planar portion. A cover 266 is similar to panel 162 in that the A cover includes a composite plate 274 (an exemplary composite 146) and a frame 276 (an exemplary body 150) coupled to the plate. Plate 274 can be any of the composites described herein, including composite 110. As shown, plate 274 can be coupled to frame 276 such that the plate defines at least a portion of planar portion 268 and the frame defines lip 272. Though, in other A-covers, a composite can define at least a portion of a lip.

A cover 266 can also be similar to panel 162 in other ways. For example, in A cover 266, frame 276 can abut at least a majority of (up to and including all of) a peripheral edge 278 of plate 274, which can provide the same or similar advantages that such a configuration provides for panel 162 (described above). For further example, frame 276 of A cover 266 can include features for attaching the A cover to lid 250, including, for example, any of the protrusions and recesses described for panel 162's frame 174, and/or can be attached to the lid in other ways, such as via one or more fasteners, adhesive, welding, and/or the like. For yet example, A cover 266's frame 276 can include rib(s) that extend from plate 274, and such rib(s) may not be extensive just as described with respect to panel 162 (but substituting panel 170's upper and lower surfaces for upper surface 282a and lower surface 282b, respectively, of plate 274). For still further example, frame 276 of A cover 266 may contact less than a majority of each of plate 274's upper surface 282a and/or lower surface 282b, in the way described for plate 170 and frame 174 of panel 162.

And, plate 274's length (measured in direction 284), width (measured perpendicularly to direction 284), and thickness 286 can be any length, width, and thickness, respectively, described above for plate 170. Similarly, frame 276's length (measured in direction 284) and width (measured perpendicular to direction 284) can be any length and width, respectively, described above for frame 174.

Finally, frame 276 can comprise any polymeric material or any non-polymeric material described with respect to frame 174, and can be coupled to plate 274 in any way described for coupling frame 174 to plate 160.

Referring additionally to FIGs. 9A-9D, shown are schematic views illustrating some of the present methods for forming a PED housing panel (e.g., tablet housing panel 162 or A cover 266) or another article (e.g., 142). As shown in FIGs. 9A and 9B, one or more composites (e.g., 110 (as shown), 146, 170, or 274) can be disposed between mold portions (e.g., 314a and 314b) of a mold (e.g., 310). The mold portions can then be moved to a closed position, thereby defining a mold cavity (e.g., 318) that contains the composite(s) (FIG. 9C). The composite(s) can be overmolded by injecting injection molding material (e.g., 322, which can be the polymeric material of body 150, frame 174, or frame 276) into the mold cavity.

Also disclosed are embodiments 1-105. Embodiment 1 is a stack of layers for use in making a composite, the stack comprising: (1) a core including a stack of one or more non-woven layers, one of which defines at least a portion of an upper surface of the core, and one of which defines at least a portion of a lower surface of the core, at least one of the non-woven layer(s) having: (a) a first set of resin fibers, each comprising: at least a majority, by weight, of a first core thermoplastic material, and a length that is between approximately 500 and approximately 1000 times a diameter of the fiber; and (b) a first set of reinforcing fibers coupled to the first set of resin fibers, each of the first set of reinforcing fibers having a modulus of elasticity that is greater than 8.5 gigapascals (GPa); and (2) one or more skins, each including a stack of one or more layers, each having unidirectional or woven fibers dispersed within a skin thermoplastic material, wherein each of the skin(s) is coupled to the core such that the skin covers at least a portion of the upper surface or the lower surface of the core.

Embodiment 2 is embodiment 1, wherein the length of each of the first set of resin fibers is between approximately 5 millimeters (mm) and approximately 75 mm, optionally, between approximately 5 mm and approximately 25 mm.

Embodiment 3 is embodiment 1 or 2, wherein, for at least one of the non-woven layer(s), the modulus of elasticity of each of the first set of reinforcing fibers is greater than 50 GPa. Embodiment 4 is any of embodiments 1-3, wherein, for at least one of the non-woven layer(s), the first set of reinforcing fibers comprises carbon fibers, aramid fibers, ceramic fibers, basalt fibers, cellulosic fibers, or liquid crystal polymer fibers, or the first set of reinforcing fibers comprises carbon fibers. Embodiment 5 is any of embodiments 1-4, wherein, for at least one of the non-woven layer(s), a diameter of each of the first set of reinforcing fibers is between approximately 5 micrometers ($\mu$m) and approximately 20 $\mu$m. Embodiment 6 is any of embodiments 1-5, wherein at least one of the non-woven layer(s) comprises between approximately 5% and approximately 30%, by weight, of the first set of reinforcing fibers.

Embodiment 7 is any of embodiments 1-6, wherein at least one of the non-woven layer(s) comprises a second set of reinforcing fibers coupled to the first set of resin fibers and the first set of reinforcing fibers. Embodiment 8 is embodiment 7, wherein, for at least one of the non-woven layer(s), each of the second set of reinforcing fibers has a modulus of elasticity that is greater than 8.5 GPa, optionally, greater than 50 GPa. Embodiment 9 is embodiment 7 or 8, wherein, for at least one of the non-woven layer(s), the second set of reinforcing fibers comprises carbon fibers, aramid fibers, ceramic fibers, basalt fibers, cellulosic fibers, or liquid crystal polymer fibers, or the second set of reinforcing fibers comprises aramid fibers. Embodiment 10 is any of embodiments 7-9, wherein at least one of the non-woven layer(s) comprises between approximately 20% and approximately 30%, by weight, of the second set of reinforcing fibers.

Embodiment 11 is any of embodiments 1-10, wherein, for at least one of the non-woven layer(s), the first core thermoplastic material has a first core transition temperature, the skin thermoplastic material of at least one of the layer(s) of at least one of the skin(s) has a skin transition temperature, and the first core transition temperature is less than or approximately equal to the skin transition temperature. Embodiment 12 is embodiment 11, wherein, for at least one of the non-woven layer(s), the first core transition temperature is between approximately 100 °C and approximately 300 °C, optionally, the first core transition temperature is approximately 105 °C. Embodiment 13 is embodiment 11 or 12, wherein, for at least one of the layer(s) of at least one of the skin(s), the skin transition temperature is between approximately 100 °C and approximately 300 °C, optionally, the skin transition temperature is approximately 105 °C.

Embodiment 14 is any of embodiments 1-10, wherein, for at least one of the non-woven layer(s), the first core thermoplastic material has a first core transition temperature and a first low-shear viscosity, the non-woven layer comprises a second set of resin fibers coupled to the first set of resin fibers and the first set of reinforcing fibers, each of the second set of resin fibers comprising at least a majority, by weight, of a second core thermoplastic material having a second core transition temperature and a second low-shear viscosity, and the first core transition temperature is at least 10% lower than the second core transition temperature and/or the first low-shear viscosity is at least 50% lower than the second low-shear viscosity.

Embodiment 15 is a stack of layers for use in making a composite, the stack comprising: (1) a core including a stack of one or more non-woven layers, one of which defines at least a portion of an upper surface of the core, and one of which defines at least a portion of a lower surface of the core, at least one of the non-woven layer(s) having: (a) a first set of resin fibers, each comprising at least a majority, by weight, of a first core thermoplastic material having a first core transition temperature and a first low-shear viscosity; and (b) a second set of resin fibers coupled to the first set of resin fibers, each of the second set of resin fibers comprising at least a majority, by weight, of a second core thermoplastic material having a second core transition temperature and a second low-shear viscosity, wherein the first core transition temperature is at least 10% lower than the second core transition temperature and/or the first low-shear viscosity is at least 50% lower than the second low-shear viscosity; and (2) one or more skins, each including a stack of one or more layers, each having unidirectional or woven fibers dispersed within a skin thermoplastic material, wherein each of the skin(s) is coupled to the core such that the skin covers at least a portion of the upper surface or the lower surface of the core.

Embodiment 16 is embodiment 15, wherein, for at least one of the non-woven layer(s), the first set of resin fibers each have a length that is between approximately 500 and approximately 1000 times a diameter of the fiber. Embodiment 17 is embodiment 16, wherein, for at least one of the non-woven layer(s), for each of the first set of resin fibers, the length is between approximately 5 mm and approximately 75 mm, optionally, between approximately 5 mm and approximately 25 mm.

Embodiment 18 is embodiment 16 or 17, wherein at least one of the non-woven layer(s) comprises a first set of reinforcing fibers coupled to the first set of resin fibers and the second set of resin fibers, each of the first set of reinforcing fibers having a modulus of elasticity that is greater than 8.5 GPa, optionally, greater than 50 GPa. Embodiment 19 is embodiment 18, wherein, for at least one of the non-woven layer(s), the first set of reinforcing fibers comprises carbon fibers, aramid fibers, ceramic fibers, basalt fibers, cellulosic fibers, or liquid crystal polymer fibers, or the first set of reinforcing fibers comprises carbon fibers. Embodiment 20 is embodiment 18 or 19, wherein, for at least one of the non-woven layer(s), a diameter of each of the first set of reinforcing fibers is between approximately 5 $\mu$m and approx-

imately 20 μm. Embodiment 21 is any of embodiments 18-20, wherein at least one of the non-woven layer(s) comprises between approximately 5% and approximately 30%, by weight, of the first set of reinforcing fibers.

Embodiment 22 is any of embodiments 18-21, wherein at least one of the non-woven layer(s) comprises a second set of reinforcing fibers coupled to the first set of resin fibers and the first set of reinforcing fibers. Embodiment 23 is embodiment 22, wherein, for at least one of the non-woven layer(s), the second set of reinforcing fibers comprises carbon fibers, aramid fibers, ceramic fibers, basalt fibers, cellulosic fibers, or liquid crystal polymer fibers, or the second set of reinforcing fibers comprises aramid fibers. Embodiment 24 is embodiment 22 or 23, wherein at least one of the non-woven layer(s) comprises between approximately 20% and approximately 30%, by weight, of the second set of reinforcing fibers.

Embodiment 25 is any of embodiments 4-24, wherein the skin thermoplastic material of at least one of the layer(s) of at least one of the skin(s) has a skin transition temperature, and, for at least one of the non-woven layer(s), the first core transition temperature is less than or approximately equal to the skin transition temperature. Embodiment 26 is embodiment 25, wherein the second core transition temperature is at least 10% higher, optionally, at least 25% higher, than the skin transition temperature. Embodiment 27 is embodiment 25 or 26, wherein, for at least one of the layer(s) of at least one of the skin(s), the skin transition temperature is between approximately 100 °C and approximately 300 °C, optionally, the skin transition temperature is approximately 105 °C.

Embodiment 28 is any of embodiments 14-27, wherein, for at least one of the non-woven layer(s), the first core transition temperature is at least 25% lower than the second core transition temperature. Embodiment 29 is any of embodiments 14-28, wherein, for at least one of the non-woven layer(s), the first core transition temperature is between approximately 100 °C and approximately 300 °C, optionally, the first core transition temperature is approximately 105 °C. Embodiment 30 is any of embodiments 14-20, wherein, for at least one of the non-woven layer(s), the second core transition temperature is between approximately 200 °C and approximately 300 °C, optionally, the second core transition temperature is approximately 217 °C.

Embodiment 31 is any of embodiments 14-30, wherein, for at least one of the non-woven layer(s), the second core thermoplastic material comprises polyethylene terephthalate (PET), polycarbonate (PC), polybutylene terephthalate (PBT), poly(1,4-cyclohexylidene cyclohexane-1,4-dicarboxylate) (PCCD), glycol-modified polycyclohexyl terephthalate (PCTG), poly(phenylene oxide) (PPO), polyethyleneimine or polyetherimide (PEI) or a derivative thereof, poly(cyclohexanedimethylene terephthalate) (PCT), polyethylene naphthalate (PEN), a polyamide (PA), polystyrene sulfonate (PSS), polyether ether ketone (PEEK), polyether ketone ketone (PEKK), polyphenylene sulfide (PPS), a copolymer thereof, or a blend thereof. Embodiment 32 is embodiment 31, wherein, for at least one of the non-woven layer(s), the second core thermoplastic material comprises PEI.

Embodiment 33 is any of embodiments 14-32, wherein, for at least one of the non-woven layer(s), the second core thermoplastic material comprises a flame retardant, and, optionally, the flame retardant comprises a phosphate structure, resorcinol bis(diphenyl phosphate), a sulfonated salt, halogen, phosphorous, talc, silica, a hydrated oxide, a brominated polymer, a chlorinated polymer, a phosphorated polymer, a nanoclay, an organoclay, a polyphosphonate, a poly[phosphonate-co-carbonate], a polytetrafluoroethylene and styrene-acrylonitrile copolymer, a polytetrafluoroethylene and methyl methacrylate copolymer, and/or a polysiloxane copolymer.

Embodiment 34 is any of embodiments 14-33, wherein, for at least one of the non-woven layer(s), each of the second set of resin fibers is approximately 2 denier. Embodiment 35 is any of embodiments 14-34, wherein, for at least one of the non-woven layer(s), the second set of resin fibers each have a length that is between approximately 500 and approximately 1000 times a diameter of the fiber. Embodiment 36 is embodiment 35, wherein, for at least one of the non-woven layers(s), for each of the second set of resin fibers, the length of the fiber is between approximately 5 mm and approximately 75 mm, optionally, between approximately 5 mm and approximately 25 mm.

Embodiment 37 is any of embodiments 14-36, wherein at least one of the non-woven layer(s) comprises between approximately 45% and approximately 55%, by weight, of the second set of resin fibers.

Embodiment 38 is any of embodiments 1-37, wherein, for at least one of the non-woven layer(s), the first core thermoplastic material comprises polyethylene terephthalate (PET), polycarbonate (PC), polybutylene terephthalate (PBT), poly(1,4-cyclohexylidene cyclohexane-1,4-dicarboxylate) (PCCD), glycol-modified polycyclohexyl terephthalate (PCTG), poly(phenylene oxide) (PPO), polypropylene (PP), polyethylene (PE), polyvinyl chloride (PVC), polystyrene (PS), polymethyl methacrylate (PMMA), polyethyleneimine or polyetherimide (PEI) or a derivative thereof, a thermoplastic elastomer (TPE), a terephthalic acid (TPA) elastomer, poly(cyclohexanedimethylene terephthalate) (PCT), polyethylene naphthalate (PEN), a polyamide (PA), polystyrene sulfonate (PSS), polyether ether ketone (PEEK), polyether ketone ketone (PEKK), polyphenylene sulfide (PPS), a copolymer thereof, or a blend thereof. Embodiment 39 is embodiment 38, wherein, for at least one of the non-woven layer(s), the first core thermoplastic material comprises PC. Embodiment 40 is any of embodiments 1-39, wherein, for at least one of the non-woven layer(s), the first core thermoplastic material comprises a flame retardant (e.g., one or more of the flame retardants listed above for embodiment 30).

Embodiment 41 is any of embodiments 1-40, wherein, for at least one of the non-woven layer(s), each of the first set of resin fibers is approximately 2 denier. Embodiment 42 is any of embodiments 1-41, wherein at least one of the non-woven layer(s) comprises between approximately 5% and approximately 25%, by weight, of the first set of resin fibers, optionally, between approximately 5% and approximately 15%, by weight, of the first set of resin fibers.

Embodiment 43 is any of embodiments 1-42, wherein the layer(s) of at least one of the skin(s) include a first layer having unidirectional fibers that are aligned in a first direction, and a second layer having unidirectional fibers that are aligned in a second direction, the second direction being angularly disposed relative to the first direction, wherein the smallest angle between the first direction and the second direction is between approximately 10 degrees and approximately 90 degrees, optionally, the smallest angle between the first direction and the second direction is approximately 90 degrees.

Embodiment 44 is any of embodiments 1-43, wherein at least one of the layer(s) of at least one of the skin(s) includes a first set of fibers aligned in a first direction, and a second set of fibers woven with the first set of fibers and aligned in a second direction that is angularly disposed relative to the first direction, wherein the smallest angle between the first direction and the second direction is between approximately 10 degrees and approximately 90 degrees, optionally, the smallest angle between the first direction and the second direction is approximately 90 degrees. Embodiment 45 is any of embodiments 1-44, wherein, for at least one of the layer(s) of at least one of the skin(s), the fibers comprise carbon fibers, aramid fibers, ceramic fibers, basalt fibers, cellulosic fibers, or liquid crystal polymer fibers, or the fibers comprise carbon fibers.

Embodiment 46 is any of embodiments 1-45, wherein, for at least one of the non-woven layer(s), the first core thermoplastic material is chemically compatible with the skin thermoplastic material of at least one of the layer(s) of at least one of the skin(s).

Embodiment 47 is any of embodiments 1-46, wherein the skin thermoplastic material of at least one of the layer(s) of at least one of the skin(s) comprises one or more of the thermoplastic materials listed above for embodiment 38. Embodiment 48 is embodiment 47, wherein the skin thermoplastic material of at least one of the layer(s) of at least one of the skin(s) comprises PC. Embodiment 49 is any of embodiments 1-48, wherein the skin thermoplastic material of at least one of the layer(s) of at least one of the skin(s) comprises a flame retardant (e.g., one or more of the flame retardants listed above for embodiment 30).

Embodiment 50 is any of embodiments 1-49, wherein at least one of the layer(s) of at least one of the skin(s) comprises a fiber volume fraction that is between approximately 30% and approximately 70%.

Embodiment 51 is any of embodiments 1-50, wherein at least one of the non-woven layer(s) has a grammage of between approximately 50 grams per square meter (gsm) and approximately 200 gsm, optionally, the grammage is approximately 60 gsm.

Embodiment 52 is a method for forming a composite, the method comprising applying heat and pressure to the stack of any of embodiments 1-51. Embodiment 53 is a method for forming a panel of a portable electronic device housing, the method comprising applying heat and pressure to the stack of any of embodiments 1-51 to form a composite, and coupling a frame to the composite such that the frame abuts at least a majority of a peripheral edge of the composite. Embodiment 54 is embodiment 53, wherein coupling the frame to the composite comprises disposing the composite within a mold, and injecting a thermoplastic material into the mold to form the frame.

Embodiment 55 is a composite comprising: (1) a core including a stack of one or more non-woven layers, one of which defines at least a portion of an upper surface of the core, and one of which defines at least a portion of a lower surface of the core, at least one of the non-woven layer(s) having: (a) a first core thermoplastic material having a first core transition temperature and a first low-shear viscosity; and (b) a set of resin fibers dispersed within the first core thermoplastic material, each of the set of resin fibers comprising at least a majority, by weight, of a second core thermoplastic material having a second core transition temperature and a second low-shear viscosity, wherein the first core transition temperature is at least 10% lower than the second core transition temperature and/or the first low-shear viscosity is at least 50% lower than the second low-shear viscosity; and (b) one or more skins, each including a stack of one or more layers, each having unidirectional or woven fibers dispersed within a skin thermoplastic material, wherein each of the skin(s) is coupled to the core such that the skin covers at least a portion of the upper surface or the lower surface of the core. Embodiment 56 is embodiment 55, wherein the set of resin fibers comprises melted fibers.

Embodiment 57 is embodiment 55 or 56, wherein at least one of the non-woven layer(s) comprises a first set of reinforcing fibers coupled to the set of resin fibers, each of the first set of reinforcing fibers having a modulus of elasticity that is greater than 8.5 GPa.

Embodiment 58 is a composite comprising: (1) a core including a stack of one or more non-woven layers, one of which defines at least a portion of an upper surface of the core, and one of which defines at least a portion of a lower surface of the core, at least one of the non-woven layer(s) having: (a) a matrix material comprising: (i) a first core thermoplastic material; and (ii) regions comprising a second core thermoplastic material that are dispersed within the first core thermoplastic material, wherein portions of the matrix material outside of the regions have a first core transition temperature and a first low-shear viscosity, and portions of the matrix material within the regions have a second core transition temperature and a second low-shear viscosity, and wherein the first core transition temperature is at least 10% lower than the second core transition temperature and/or the first low-shear viscosity is at least 50% lower than the second low-shear viscosity; and (b) a first set of reinforcing fibers dispersed within the matrix material, the first set of reinforcing fibers having a modulus of elasticity that is greater than 8.5 GPa; and (2) one or more skins, each including a stack of one or more layers, each having unidirectional or woven fibers dispersed within a skin thermoplastic material, wherein each of the skin(s) is coupled to the core such that the skin covers at least a portion of the upper surface or the lower surface of the core.

Embodiment 59 is embodiment 57 or 58, wherein, for at least one of the non-woven layer(s), the modulus of elasticity of each of the first set of reinforcing fibers is greater than 50 GPa. Embodiment 60 is any of embodiments 57-59, wherein, for at least one of the non-woven layer(s), the first set of reinforcing fibers comprises carbon fibers, aramid fibers, ceramic fibers, basalt fibers, cellulosic fibers, or liquid crystal polymer fibers, or the first set of reinforcing fibers comprises carbon fibers. Embodiment 61 is any of embodiments 57-60, wherein, for at least one of the non-woven layer(s), a diameter of each of the first set of reinforcing fibers is between approximately 5 $\mu$m and approximately 20 $\mu$m. Embodiment 62 is any of embodiments 57-61, wherein at least one of the non-woven layer(s) comprises between approximately 5% and approximately 30%, by weight, of the first set of reinforcing fibers.

Embodiment 63 is any of embodiments 57-62, wherein at least one of the non-woven layer(s) comprises a second set of reinforcing fibers coupled to the first set of reinforcing fibers. Embodiment 64 is embodiment 63, wherein, for at least one of the non-woven layer(s), each of the second set of reinforcing fibers has a modulus of elasticity that is greater than 8.5 GPa, optionally, greater than 50 GPa. Embodiment 65 is embodiment 63 or 64, wherein, for at least one of the non-woven layer(s), the second set of reinforcing fibers comprises carbon fibers, aramid fibers, ceramic fibers, basalt fibers, cellulosic fibers, or liquid crystal polymer fibers, or the second set of reinforcing fibers comprises aramid fibers. Embodiment 66 is any of embodiments 63-65, wherein at least one of the non-woven layer(s) comprises between approximately 20% and approximately 30%, by weight, of the second set of reinforcing fibers.

Embodiment 67 is any of embodiments 55-66, wherein the skin thermoplastic material of at least one of the layer(s) of at least one of the skin(s) has a skin transition temperature, and, for at least one of the non-woven layer(s), the first core transition temperature is less than or approximately equal to the skin transition temperature. Embodiment 68 is embodiment 67, wherein the second core transition temperature is at least 10% higher, optionally, at least 25% higher, than the skin transition temperature. Embodiment 69 is embodiment 67 or 68, wherein, for at least one of the layer(s) of at least one of the skin(s), the skin transition temperature is between approximately 100 °C and approximately 300 °C, optionally, the skin transition temperature is approximately 105 °C.

Embodiment 70 is any of embodiments 55-69, wherein, for at least one of the non-woven layer(s), the first core transition temperature is at least 25% lower than the second core transition temperature. Embodiment 71 is any of embodiments 55-70, wherein, for at least one of the non-woven layer(s), the first core transition temperature is between approximately 100 °C and approximately 300 °C, optionally, the first core transition temperature is approximately 105 °C. Embodiment 72 is any of embodiments 55-71, wherein, for at least one of the non-woven layer(s), the second core transition temperature is between approximately 200 °C and approximately 300 °C, optionally, the second core transition temperature is approximately 217 °C.

Embodiment 73 is any of embodiments 55-72, wherein, for at least one of the non-woven layer(s), the first core thermoplastic material comprises one or more of the thermoplastic materials listed above for embodiment 38. Embodiment 74 is embodiment 73, wherein, for at least one of the non-woven layer(s), the first core thermoplastic material comprises PC. Embodiment 75 is any of embodiments 55-74, wherein, for at least one of the non-woven layer(s), the first core thermoplastic material comprises a flame retardant (e.g., one or more of the flame retardants listed above for embodiment 30).

Embodiment 76 is any of embodiments 55-75, wherein at least one of the non-woven layer(s) comprises between approximately 5% and approximately 25%, by weight, of the first core thermoplastic material, optionally, between approximately 5% and approximately 15%, by weight, of the first core thermoplastic material.

Embodiment 77 is any of embodiments 55-76, wherein, for at least one of the non-woven layer(s), the second core thermoplastic material comprises one or more of the thermoplastic materials listed above for embodiment 33. Embodiment 78 is embodiment 77, wherein, for at least one of the non-woven layer(s), the second core thermoplastic material comprises PEI. Embodiment 79 is any of embodiments 55-78, wherein, for at least one of the non-woven layer(s), the second core thermoplastic material comprises a flame retardant (e.g., one or more of the flame retardants listed above for embodiment 30).

Embodiment 80 is any of embodiments 55-79, wherein at least one of the non-woven layer(s) comprises between approximately 45% and approximately 55%, by weight, of the second core thermoplastic material.

Embodiment 81 is any of embodiments 55-80, wherein the layer(s) of at least one of the skin(s) include a first layer having unidirectional fibers that are aligned in a first direction, and a second layer having unidirectional fibers that are aligned in a second direction, the second direction being angularly disposed relative to the first direction, wherein the smallest angle between the first direction and the second direction is between approximately 10 degrees and approximately 90 degrees, optionally, the smallest angle between the first direction and the second direction is approximately 90 degrees.

Embodiment 82 is any of embodiments 55-81, wherein at least one of the layer(s) of at least one of the skin(s) includes a first set of fibers aligned in a first direction, and a second set of fibers woven with the first set of fibers and aligned in a second direction that is angularly disposed relative to the first direction, wherein the smallest angle between the first direction and the second direction is between approximately 10 degrees and approximately 90 degrees, optionally, the smallest angle between the first direction and the second direction is approximately 90 degrees. Embodiment 83 is any of embodiments 55-82, wherein, for at least one of the layer(s) of at least one of the skin(s), the fibers comprise carbon fibers, aramid fibers, ceramic fibers, basalt fibers, cellulosic fibers, or liquid crystal polymer fibers, or the fibers comprise carbon fibers.

Embodiment 84 is any of embodiments 55-83, wherein, for at least one of the non-woven layer(s), the first core thermoplastic material is chemically compatible with the skin thermoplastic material of at least one of the layer(s) of at least one of the skin(s). Embodiment 85 is any of embodiments 55-84, wherein the skin thermoplastic material of at least one of the layer(s) of at least one of the skin(s) comprises one or more of the thermoplastic materials listed above for embodiment 38. Embodiment 86 is embodiment 85, wherein the skin thermoplastic material of at least one of the layer(s) of at least one of the skin(s) comprises PC. Embodiment 87 is any of embodiments 55-86, wherein the skin thermoplastic material of at least one of the layer(s) of at least one of the skin(s) comprises a flame retardant (e.g., one or more of the flame retardants listed above for embodiment 30).

Embodiment 88 is any of embodiments 55-87, wherein at least one of the layer(s) of at least one of the skin(s) comprises a fiber volume fraction that is between approximately 30% and approximately 70%. Embodiment 89 is any of embodiments 55-88, wherein at least one of the non-woven layer(s) has a grammage of between approximately 50 gsm and approximately 200 gsm, optionally, the grammage is approximately 60 gsm.

Embodiment 90 is any of embodiments 55-89, wherein at least one of the layer(s) of at least one of the skin(s) has a maximum thickness that is between approximately 0.10 and 0.40 mm. Embodiment 91 is any of embodiments 55-90, wherein a maximum thickness of the composite is between approximately 0.5 mm and approximately 2.0 mm. Embodiment 92 is any of embodiments 55-91, wherein a maximum thickness of the core is between approximately 30% and approximately 75% of a maximum thickness of the composite.

Embodiment 93 is a panel of a portable electronic device housing, the panel comprising the composite of any of embodiments 55-92. Embodiment 94 is embodiment 93, comprising a frame coupled to the composite such that the frame abuts at least a majority of a peripheral edge of the composite. Embodiment 95 is a panel of a portable electronic device housing, the panel comprising: (1) a composite plate having: (a) a core including a stack of one or more non-woven layers, one of which defines at least a portion of an upper surface of the core, and one of which defines at least a portion of a lower surface of the core, at least one of the non-woven layer(s) having: (i) a core thermoplastic material; and (ii) a first set of reinforcing fibers dispersed within the core thermoplastic material, each of the first set of reinforcing fibers having a modulus of elasticity that is greater than 8.5 GPa; and (b) one or more skins, each including a stack of one or more layers, each having unidirectional or woven fibers dispersed within a skin thermoplastic material, wherein each of the skin(s) is coupled to the core such that the skin covers at least a portion of the upper surface or the lower surface of the core; and (2) a frame coupled to the composite plate such that the frame abuts at least a majority of a peripheral edge of the composite. Embodiment 96 is embodiment 94 or 95, wherein the frame defines one or more protrusions and/or one or more recesses configured to couple the panel to another portion of the portable electronic device housing.

Embodiment 97 is any of embodiments 94-96, wherein the frame comprises a frame thermoplastic material. Embodiment 98 is embodiment 97, wherein the frame thermoplastic material comprises one or more of the thermoplastic materials listed above for embodiment 38. Embodiment 99 is any of embodiments 93-98, wherein the portable electronic device comprises a laptop, a tablet, or a cellular phone.

Embodiment 100 is a method for forming a panel of a portable electronic device housing, the method comprising disposing the composite of any of embodiments 55-92 within a mold, and injecting a thermoplastic material into the mold to form a frame that abuts at least a majority of a peripheral edge of the composite. Embodiment 101 is embodiment 54 or 100, wherein the thermoplastic material injected into the mold comprises one or more of the thermoplastic materials listed above for embodiment 38. Embodiment 102 is embodiment 101, wherein the thermoplastic material injected into the mold comprises PC. Embodiment 103 is any of embodiments 54 and 100-102, wherein the thermoplastic material injected into the mold comprises a flame retardant (e.g., one or more of the flame retardants listed above for embodiment 30).

Embodiment 104 is any of embodiments 54 and 100-103, wherein the thermoplastic material injected into the mold includes dispersed elements, optionally, the dispersed elements comprise fibers. Embodiment 105 is embodiment 104, wherein the thermoplastic material injected into the mold comprises between approximately 20% and approximately 60% of the fibers by weight.

## EXAMPLES

The present invention will be described in greater detail by way of specific examples. The following examples are offered for illustrative purposes only and are not intended to limit the invention in any manner. Those of skill in the art will readily recognize a variety of noncritical parameters that can be changed or modified to yield essentially the same results.

## EXAMPLE 1

### Composites of the Present Disclosure vs. Comparative Composites

A sample one of the present composites was formed by compression molding a stack of layers, including a core of non-woven layers and skins, each including unidirectional fiber-reinforced layers, disposed on opposing sides of the core. There were ten such non-woven layers, each having a grammage of 60 gsm and:

(1) 50%, by weight, ULTEM 1010 fibers (2 denier, 0.5 inch (in) chop), having a glass transition temperature of approximately 217 °C;
(2) 10%, by weight, LEXAN 141 fibers (2 denier, 0.5 in chop);
(3) 15%, by weight, carbon fibers; and
(4) 25%, by weight, aramid fibers.

The unidirectional fiber-reinforced layers of the skins each included carbon fibers dispersed within a polycarbonate matrix material, which, due to its inclusion of a flame retarding agent, had a glass transition temperature of approximately 105 °C. And, each such layer had a fiber weight fraction of 65% and a thickness of 0.15 mm. For convenience, a layer having the same properties as these skin layers is referred to as a "UD layer 1." The layers of the skins and core were arranged in a [90, 0, core, 0, 90] layup.

Compression molding of the layup was performed using an induction heated forming tool at a temperature of 290 °C and a force of 100 tons. The total thickness of the sample composite was 1.00 mm, approximately 40% of which was due to its core. And, after trimming with an abrasive water jet, the sample composite had a length of 250 mm and a width of 100 mm.

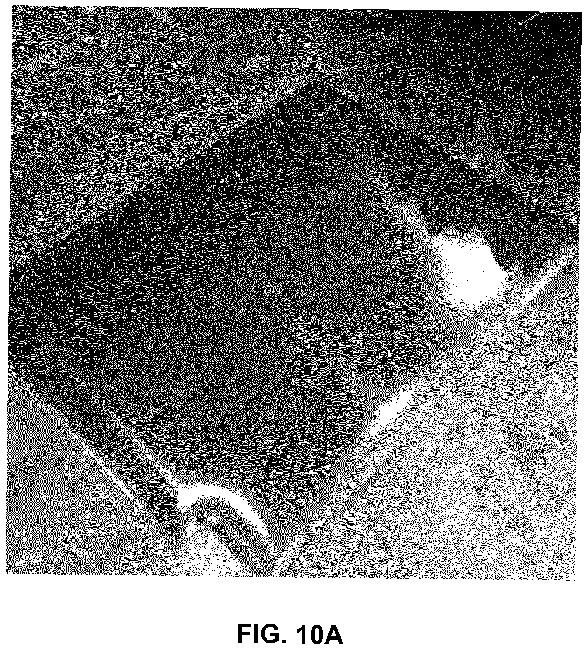

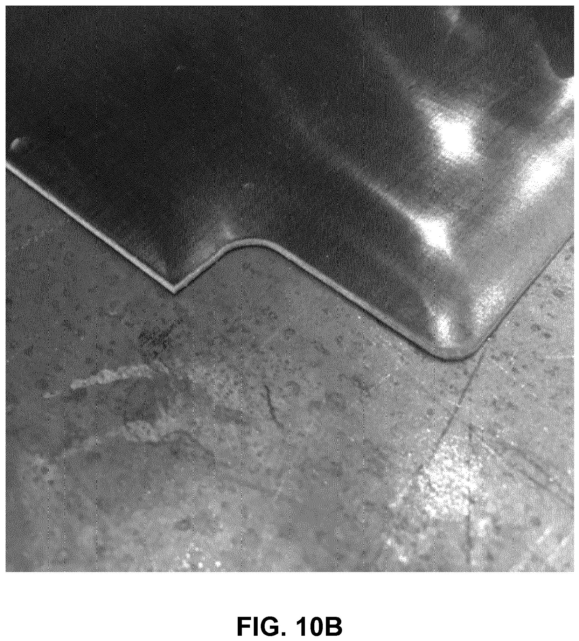

FIGs. 10A and 10B are photographs of the sample composite. As shown, the sample composite had a smooth and aesthetically-pleasing surface finish, with minimal unwet areas or other defects. This may be due, in part, to the non-woven layers-via their compressibility and resilience-encouraging a uniform application of pressure to the layup during consolidation.

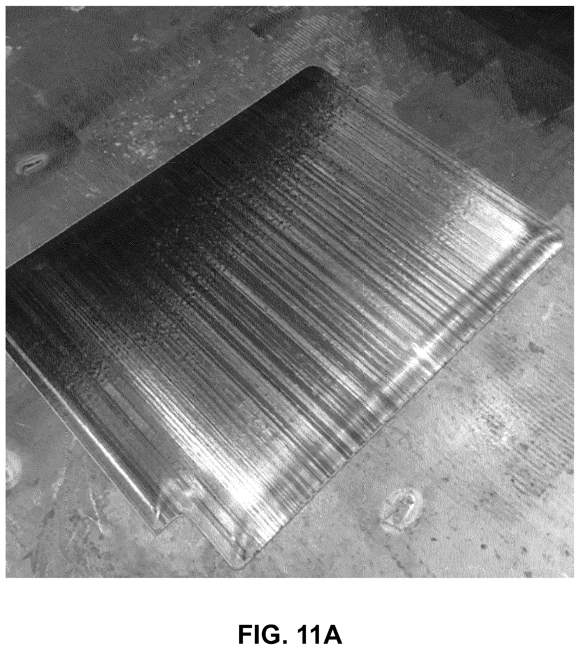

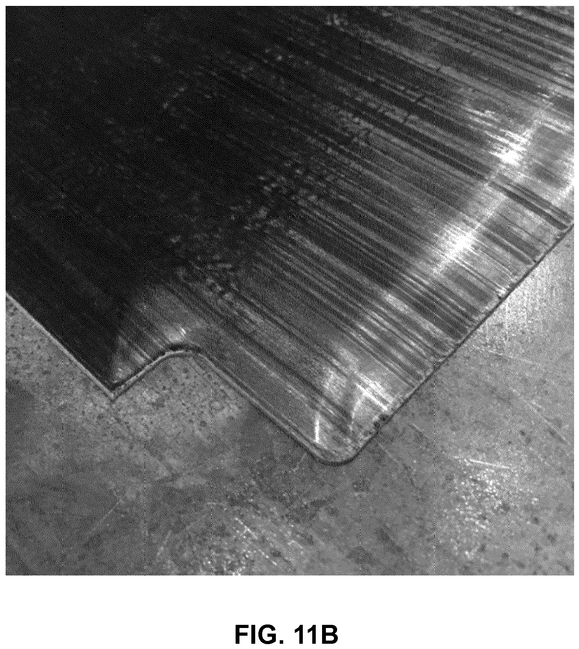

A comparative composite was formed by consolidating UD layer Is and a 0.1 mm thick LEXAN film arranged in a [$90_2$, 0, film, 0, $90_2$] layup. The comparative composite had a thickness of 1.0 mm. FIGs. 11A and 11B are photographs of the comparative composite, which had a rougher surface finish, marked by unwet areas and other defects, than did the sample composite. Additionally, edges of the comparative composite-which were trimmed as described for the sample composite-exhibited a significant amount of fraying when compared to the sample composite, whose edges showed little to no fraying (compare FIG. 10B with FIG. 11B).

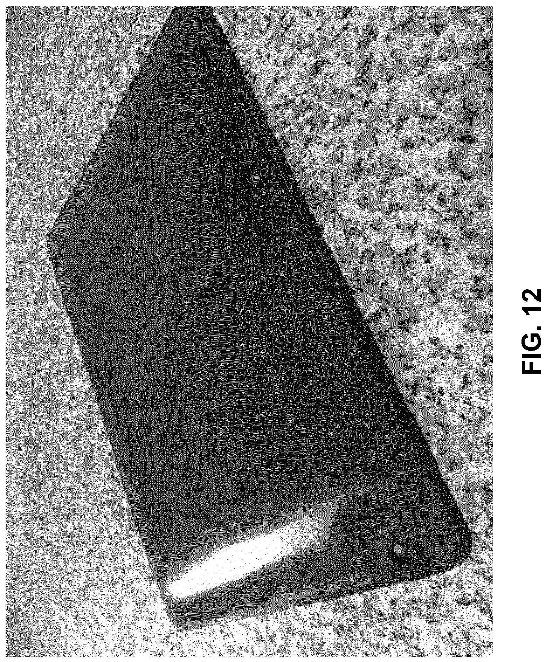

A sample one of the present PED housing panels was produced by overmolding the sample composite using LNP THERMOCOMP D452 (including 40%, by weight, glass reinforcement) as the injection molding material. In the sample panel-shown photographically in FIG. 12-the sample composite had the structure shown for plate 170 in FIGs. 6A-6I, and the injection molding material formed a frame having the structure shown for frame 174 in the same figures. Notably, the sample panel suffered from little to no bowing, which may be evidence of the non-woven layers-and perhaps specifically the aramid and/or relatively high-temperature and relatively high-viscosity polyetherimide fibers thereof-limiting deformation of the composite that might otherwise have occurred as the composite and the injection molding material cooled (by changing the thermoelastic behavior of the composite to reduce the difference between shrinkage of the composite and shrinkage of the injection molding material).

## EXAMPLE 2

### Composites of the Present Disclosure vs. Comparative Composites

### *A. Layups and Consolidation Parameters for Sample and Comparative Composites*

Three sets of the present composites-S1, S2, and S3-were produced. The S1 composites each included a core of 10 non-woven layers, each having carbon fibers, aramid fibers, polyetherimide fibers, and LEXAN polycarbonate fibers. Each of the S1 composites included skins disposed on opposing sides of its core, where each layer of the skins was a UD layer 1. The S1 composites each had a [90, 0, core, 0, 90] layup.

Each of the S2 composites had a core of 10 non-woven layers, each having carbon fibers, aramid fibers, polyetherimide fibers, and PVA fibers. The S2 composites each included skins disposed on opposing sides of its core, the layers of each of the skins being UD layer 1s. As with the S1 composites, the layup of each of the S2 composites was [90, 0, core, 0, 90].

Finally, the S3 composites each had a core of 4 non-woven layers, each including glass fibers, polyetherimide fibers, and LEXAN FST9405 fibers. For each of the S3 composites, the core also included a 0.5 mm thick film disposed between its non-woven layers. As with the S1 and S2 composites, the S3 composites each included skins disposed on opposing sides of its core, where each layer of the skins was a UD layer 1. The layup of each of the S3 composites was [90, 0, 2 non-woven layers, film, 2 non-woven layers, 0, 90].

Two sets of comparative composites-C1 and C2-were also produced. Each of the C1 composites consisted of four layers, each including glass fibers arranged in an 8 harness satin weave having a 296 gsm fiber areal weight and dispersed in a polycarbonate matrix material. The C2 composites each consisted of UD layer Is arranged in a [$90_2$, 0, 0, $90_2$] layup.

Each of the SI-S3 and C1 and C2 composites were consolidated with a 10 gsm carbon fiber veil disposed over one of its skins. Consolidation parameters for the sample and comparative composites are included in TABLE 1 below.

**TABLE 1: Consolidation Parameters for the Sample and Comparative Composites**

| Composite | Temperature (°C) | Pressure (MPa) |
|---|---|---|
| S1 | 288 | 6.89 |
| S2 | 288 | 6.89 |
| S3 | 260 | 3.45 |
| C2 | 232 | 2.41 |

As shown, the S1-S3 composites were consolidated using higher temperatures and pressures than were the C2 composites. Such successful use of higher temperatures and pressures may have been facilitated by stability and resistance to lateral flow added to the S1-S3 composites by their non-woven layers, and perhaps more particularly by the aramid fibers (in S1 and S2) and/or the relatively high-temperature and relatively high-viscosity polyetherimide fibers (in each of S1-S3) thereof.

For each of the SI-S3 and C2 composite sets, the average consolidated thickness of composites within the set is included in TABLE 2, below.

**TABLE 2: Average Consolidated Thicknesses of the Sample and Comparative Composites**

| Composites | Average Consolidated Thickness (mm) |
|---|---|
| S1 | 0.999 |
| S2 | 1.010 |
| S3 | 1.040 |
| C1 | 0.960 |
| C2 | 0.937 |

### B. Cross-sectional Photographs of the Sample and Comparative Composites

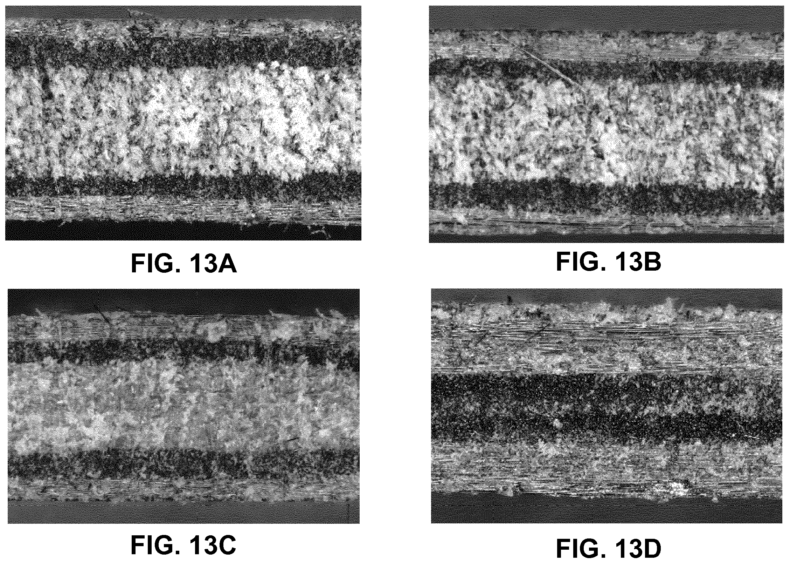

Cross-sectional photographs of one of each of the SI-S3 and C2 composites were taken at 200 times magnification. FIGs. 13A-13D are these photographs: FIG. 13A is of the S1 composite; FIG. 13B is of the S2 composite; FIG. 13C is of the S3 composite; and FIG. 13D is of the C2 composite.

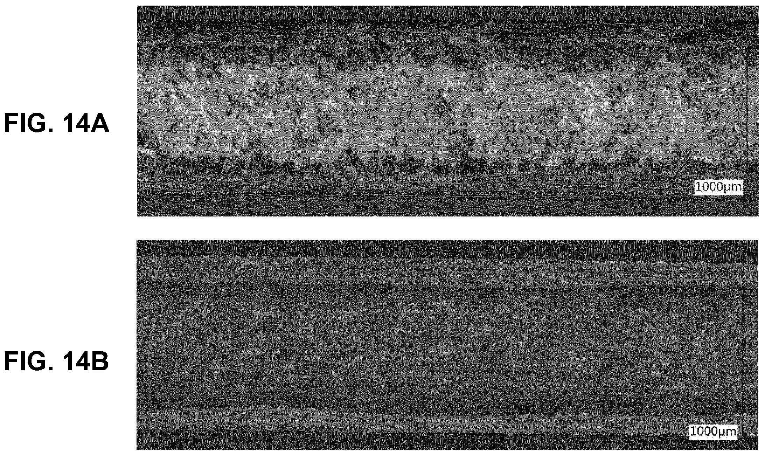

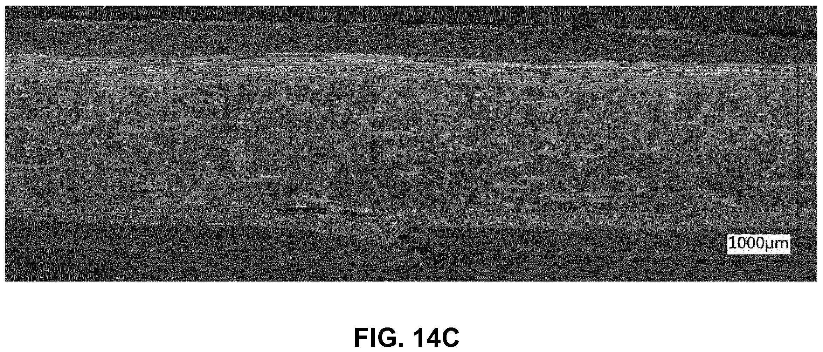

FIGs. 14A-14C are cross-sectional photographs of one of the S2 composites taken at 100 times magnification. FIG. 14A depicts the composite after trimming, FIG. 14B depicts the composite of FIG. 14A after polishing, and FIG. 14C depicts the composite of FIG. 14B after undergoing a deflection test. As best seen in FIGs. 14B and 14C, the non-woven layers of the core deformed to compensate for unevenness of the skins. And, as shown in FIG. 14C, such non-woven layers blunted the crack that formed in the composite during the deflection test.

**C. *Surface Finishes of the Sample and Comparative Composites***

Surface roughness parameters-Rz and Ra-for the front and back surfaces of three (a, b, and c, in the tables below) of each of the SI-S3 and C2 composites were determined. For each composite, Rz was determined as:

$$Rz = \frac{1}{N} \sum_{i=1}^{N} \left[ y(x)_{max,i} - y(x)_{min,i} \right] \tag{1}$$

where $y(x)$ is a profile, lying in a plane that is perpendicular to the plane of the composite, showing variations in the height of the front or back surface of the composite relative to the median height of that surface along a direction-the $x$-direction-that is parallel to the plane of the composite, N is the number of equal-length segments that the profile was divided into (5, in each instance), $y(x)_{max, i}$ is the maximum value of $y(x)$ for a given segment, $i$, and $y(x)_{min,i}$ is the minimum value of $y(x)$ for a given segment, $i$. And, for each composite, Ra was determined as:

$$Ra = \frac{1}{l} \int_0^l |y(x)| dx \tag{2}$$

where $y(x)$ is a profile as described above, and $l$ is the length of that profile, measured in the $x$-direction. Ra for each composite was determined numerically.

The results are included in TABLES 3-6, below.

**TABLE 3: Surface Roughnesses of the S1 Composites**

| Composite | Upper Surface | | Lower Surface | |
|---|---|---|---|---|
| | Rz | Ra | Rz | Ra |
| a | 29.8 | 0.64 | 13.0 | 0.31 |
| b | 33.3 | 0.57 | 5.42 | 0.29 |
| c | 35.7 | 1.50 | 16.0 | 1.10 |
| Average | 32.9 | 0.90 | 11.5 | 0.57 |

**TABLE 4: Surface Roughnesses of the S2 Composites**

| Composite | Upper Surface | | Lower Surface | |
|---|---|---|---|---|
| | Rz | Ra | Rz | Ra |
| a | 23.8 | 0.31 | 23.7 | 2.25 |
| b | 19.7 | 0.63 | 2.72 | 0.22 |
| c | 84.0 | 7.88 | 20.9 | 2.15 |
| Average | 42.5 | 2.94 | 15.8 | 1.54 |

**TABLE 5: Surface Roughnesses of the S3 Composites**

| Composite | Upper Surface | | Lower Surface | |
|---|---|---|---|---|
| | Rz | Ra | Rz | Ra |
| a | 66.8 | 7.03 | 20.3 | 0.95 |
| b | 145 | 13.2 | 4.11 | 0.20 |
| c | 139 | 28.6 | 23.3 | 2.12 |
| Average | 117 | 16.3 | 15.9 | 1.09 |

**TABLE 6: Surface Roughnesses of the C2 Composites**

| Composite | Upper Surface | | Lower Surface | |
|---|---|---|---|---|
| | Rz | Ra | Rz | Ra |
| a | 151.2 | 24.5 | 19.4 | 0.79 |
| b | 91.1 | 15.1 | 17.3 | 1.23 |
| c | 147 | 21.2 | 28.6 | 3.00 |
| Average | 130 | 20.3 | 21.8 | 1.67 |

As shown, average values of Rz and Ra (for the upper and lower surfaces) were lower for the SI-S3 composites than for the C2 composites. Again, this may be evidence of compressibility, resiliency, stability, and/or resistance to lateral flow added to the SI-S3 composites by their non-woven layers. Additionally, the S1 and S2 composites had lower average Rz and Ra values for their upper surfaces than did the S3 composites, which may be due to the aramid fibers in the non-woven layers of the S1 and S2 composites.

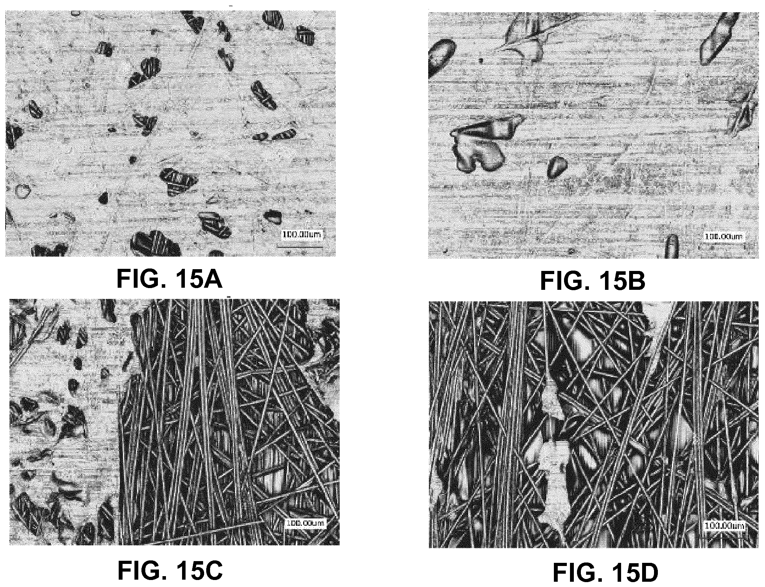

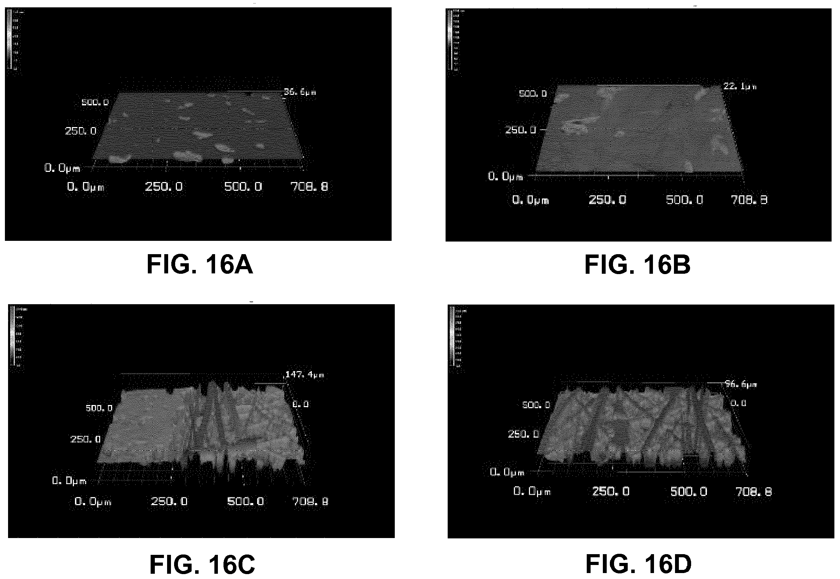

Photographs of the upper surfaces of one of each of the S1, S2, S3, and C2 composites are included in FIGs. 15A-15D, respectively, and graphs showing surface roughnesses of the upper surfaces of one of each of the S1, S2, S3, and C2 composites are included in FIGs. 16A-16D, respectively. These photographs and graphs are consistent with the roughness parameters shown in TABLES 3-6.

**EXAMPLE 3**

**PED Housing Panels of the Present Disclosure vs. Comparative PED Housing Panels**

A set of EXAMPLE 1 sample PED housing panels (S4o) was prepared as well as three sets of comparative PED housing panels-C1o, C3o, and C4o. The composite of each of the C1o panels was one of the C1 composites. The composite of each of the C3o panels was 0.90 mm thick and consisted of four layers, each comprising carbon fibers arranged in a plain weave having a 200 gsm fiber areal weight and dispersed in a polycarbonate matrix material. And, the composite of each of the C4o panels was an EXAMPLE 1 comparative composite. As with the S4o panels, each of the C1o, C3o, and C4o panels was formed by overmolding its composite using LNP THERMOCOMP D452 (including 40%, by weight, glass reinforcement) as the injection molding material and such that the composite had the structure shown for plate 170 in FIGs. 6A-6I, and the injection molding material formed a frame having the structure shown for frame 174 in the same figures.

For each of the panels in this example, the panel was laid composite-up on a flat horizontal surface (as shown in FIG. 12 for its panel) to obtain measurements indicative of bowing. Such measurements included: (1) the vertical distance-referred to as "frame bow"-between the surface and the edge of the frame at the midpoint of one of the longest sides of the frame; and (2) the vertical distance-referred to as "center height"-between the surface and the top of the composite at its center.

Average frame bows and center heights for each of the S4o, C1o, C3o, and C4o sets of panels are included in TABLE 7, below.

**TABLE 7: Average Frame Bows and Center Heights for the Sample and Comparative Panels**

| Panels | Average Frame Bow (mm) | Average Center Height (mm) |
|---|---|---|
| S4o | 0.13 | 8.11 |
| C1o | 0.57 | 9.78 |
| C3o | 1.07 | 9.82 |
| C4o | 1.20 | 10.60 |

The S4o panels exhibited less bowing than the C1o, C3o, and C4o panels, as evidenced by both the smaller average frame bow and the smaller average center height for the S4o panels. In this example, bowing always resulted in an increase, rather than a decrease, in center height; thus, the increased average center heights for the C1o, C3o, and C4o panels relative to that for the S4o panels are attributable to more, rather than less, bowing.

The above specification and examples provide a complete description of the structure and use of illustrative embodiments. Although certain embodiments have been described above with a certain degree of particularity, or with reference to one or more individual embodiments, those skilled in the art could make numerous alterations to the disclosed embodiments without departing from the scope of this invention. As such, the various illustrative embodiments of the methods and systems are not intended to be limited to the particular forms disclosed. Rather, they include all modifications and alternatives falling within the scope of the claims, and embodiments other than the one shown may include some or all of the features of the depicted embodiment. For example, elements may be omitted or combined as a unitary structure, and/or connections may be substituted. Further, where appropriate, aspects of any of the examples described above may be combined with aspects of any of the other examples described to form further examples having comparable or different properties and/or functions, and addressing the same or different problems. Similarly, it will be understood that the benefits and advantages described above may relate to one embodiment or may relate to several embodiments.

The claims are not intended to include, and should not be interpreted to include, means-plus- or step-plus-function limitations, unless such a limitation is explicitly recited in a given claim using the phrase(s) "means for" or "step for," respectively.

**Claims**

1. A stack of layers for use in making a composite, the stack comprising:

   a core including a stack of one or more non-woven layers, one of which defines at least a portion of an upper surface of the core, and one of which defines at least a portion of a lower surface of the core, at least one of the non-woven layer(s) having:

   a first set of resin fibers, each comprising at least a majority, by weight, of a first core thermoplastic material having a first core transition temperature and a first low-shear viscosity; and
   a second set of resin fibers coupled to the first set of resin fibers, each of the second set of resin fibers comprising at least a majority, by weight, of a second core thermoplastic material having a second core transition temperature and a second low-shear viscosity;
   wherein the first core transition temperature is at least 10% lower than the second core transition temperature and/or the first low-shear viscosity is at least 50% lower than the second low-shear viscosity;
   a first set of reinforcing fibers coupled to the first and second sets of resin fibers, each of the first set of reinforcing fibers having a modulus of elasticity that is greater than 8.5 gigapascals (GPa); and

   one or more skins, each including a stack of one or more layers, each having unidirectional or woven fibers dispersed within a skin thermoplastic material;
   wherein each of the skin(s) is coupled to the core such that the skin covers at least a portion of the upper surface or the lower surface of the core.

2. The stack of claim 1, wherein, for at least one of the non-woven layer(s):

   the first set of reinforcing fibers comprises carbon fibers, aramid fibers, ceramic fibers, basalt fibers, cellulosic fibers, or liquid crystal polymer fibers; or
   the first set of reinforcing fibers comprises carbon fibers or aramid fibers.

3. The stack of claim 1 or 2, wherein at least one of the non-woven layer(s) comprises:

   a second set of reinforcing fibers coupled to the first set of resin fibers and the first set of reinforcing fibers, each of the second set of reinforcing fibers having a modulus of elasticity that is greater than 8.5 GPa;
   the second set of reinforcing fibers comprises:

   carbon fibers, aramid fibers, ceramic fibers, basalt fibers, cellulosic fibers, or liquid crystal polymer fibers; or
   aramid fibers; and

   each of the second set of reinforcing fibers comprises a material that is distinct from a material of each of the first set of reinforcing fibers.

4. The stack of any of claims 1-3, wherein at least one of the non-woven layer(s) comprises between approximately 5% and approximately 25%, by weight, of the first set of resin fibers, optionally, between approximately 5% and approximately 15%, by weight, of the first set of resin fibers.

5. The stack of any of claims 1-4, wherein at least one of the non-woven layer(s) comprises between approximately 45% and approximately 55%, by weight, of the second set of resin fibers.

6. A composite comprising:

a core including a stack of one or more non-woven layers, one of which defines at least a portion of an upper surface of the core, and one of which defines at least a portion of a lower surface of the core, at least one of the non-woven layer(s) having:

a first core thermoplastic material having a first core transition temperature and a first low-shear viscosity; a set of resin fibers dispersed within the first core thermoplastic material, each of the set of resin fibers comprising:

at least a majority, by weight, of a second core thermoplastic material having a second core transition temperature and a second low-shear viscosity; wherein the first core glass temperature is at least 10% lower than the second core transition temperature and/or the first low-shear viscosity is at least 50% lower than the second low-shear viscosity;

a first set of reinforcing fibers coupled to the set of resin fibers, each of the first set of reinforcing fibers having a modulus of elasticity that is greater than 8.5 GPa;

one or more skins, each including a stack of one or more layers, each having unidirectional or woven fibers dispersed within a skin thermoplastic material; wherein each of the skin(s) is coupled to the core such that the skin covers at least a portion of the upper surface or the lower surface of the core.

7. A composite comprising:

a core including a stack of one or more non-woven layers, one of which defines at least a portion of an upper surface of the core, and one of which defines at least a portion of a lower surface of the core, at least one of the non-woven layer(s) having:

a matrix material comprising:

a first core thermoplastic material; and regions comprising a second core thermoplastic material that are dispersed within the first core thermoplastic material; wherein portions of the matrix material outside of the regions have a first core transition temperature and a first low-shear viscosity, and portions of the matrix material within the regions have a second core transition temperature and a second low-shear viscosity; and wherein the first core transition temperature is at least 10% lower than the second core transition temperature and/or the first low-shear viscosity is at least 50% lower than the second low-shear viscosity; and

a first set of reinforcing fibers dispersed within the matrix material, the first set of reinforcing fibers having a modulus of elasticity that is greater than 8.5 GPa; and

one or more skins, each including a stack of one or more layers, each having unidirectional or woven fibers dispersed within a skin thermoplastic material; wherein each of the skin(s) is coupled to the core such that the skin covers at least a portion of the upper surface or the lower surface of the core.

8. The composite of claim 6 or 7, wherein, for at least one of the non-woven layer(s):

the first set of reinforcing fibers comprises carbon fibers, aramid fibers, ceramic fibers, basalt fibers, cellulosic fibers, or liquid crystal polymer fibers; or

the first set of reinforcing fibers comprises carbon fibers or aramid fibers.

9. The composite of any of claims 6-8, wherein at least one of the non-woven layer(s) comprises between approximately 5% and approximately 30%, by weight, of the first set of reinforcing fibers.

10. The composite of any of claims 6-9, wherein at least one of the non-woven layer(s) comprises:

a second set of reinforcing fibers coupled to the first set of reinforcing fibers, each of the second set of reinforcing fibers having a modulus of elasticity that is greater than 8.5 GPa;
the second set of reinforcing fibers comprises:

carbon fibers, aramid fibers, ceramic fibers, basalt fibers, cellulosic fibers, or liquid crystal polymer fibers; or aramid fibers; and

each of the second set of reinforcing fibers comprises a material that is distinct from a material of each of the first set of reinforcing fibers.

11. The composite of claim 10, wherein at least one of the non-woven layer(s) comprises between approximately 20% and approximately 30%, by weight, of the second set of reinforcing fibers.

12. The composite of any of claims 6-11, wherein, for at least one of the non-woven layer(s), the first core thermoplastic material comprises polyethylene terephthalate (PET), polycarbonate (PC), polybutylene terephthalate (PBT), poly(1,4-cyclohexylidene cyclohexane-1,4-dicarboxylate) (PCCD), glycol-modified polycyclohexyl terephthalate (PCTG), poly(phenylene oxide) (PPO), polypropylene (PP), polyethylene (PE), polyvinyl chloride (PVC), polystyrene (PS), polymethyl methacrylate (PMMA), polyethyleneimine or polyetherimide (PEI) or a derivative thereof, a thermoplastic elastomer (TPE), a terephthalic acid (TPA) elastomer, poly(cyclohexanedimethylene terephthalate) (PCT), polyethylene naphthalate (PEN), a polyamide (PA), polystyrene sulfonate (PSS), polyether ether ketone (PEEK), polyether ketone ketone (PEKK), polyphenylene sulfide (PPS), a copolymer thereof, or a blend thereof, optionally, the first core thermoplastic material comprises PC.

13. The composite of any of claims 6-12, wherein at least one of the non-woven layer(s) comprises between approximately 5% and approximately 25%, by weight, of the first core thermoplastic material, optionally, between approximately 5% and approximately 15%, by weight, of the first core thermoplastic material.

14. The composite of any of claims 6-13, wherein, for at least one of the non-woven layer(s), the second core thermoplastic material comprises PET, PC, PBT, PCCD, PCTG, PPO, PEI or a derivative thereof, PCT, PEN, a PA, PSS, PEEK, PEKK, PPS, a copolymer thereof, or a blend thereof, optionally, the second core thermoplastic material comprises PEI.

15. The composite of any of claims 6-14, wherein at least one of the non-woven layer(s) comprises between approximately 45% and approximately 55%, by weight, of the second core thermoplastic material.

**Patentansprüche**

1. Stapel von Schichten zur Verwendung bei der Herstellung eines Verbundstoffs, wobei der Stapel Folgendes umfasst:

einen Kern mit einem Stapel aus einer oder mehreren nicht gewebten Schichten, wobei einer davon mindestens einen Teil einer oberen Oberfläche des Kerns definiert und einer mindestens einen Teil einer unteren Oberfläche des Kerns definiert, wobei mindestens eine der nicht gewebten Schichten Folgendes aufweist:

einen ersten Satz von Harzfasern, der jeweils mindestens einen Hauptgewichtsanteil eines ersten thermoplastischen Kernmaterials mit einer ersten Kernübergangstemperatur und einer ersten Viskosität mit niedriger Scherung umfasst; und
einen zweiten Satz von Harzfasern, der mit dem ersten Satz von Harzfasern gekoppelt ist, wobei jeder der zweiten Sätze von Harzfasern mindestens einen Hauptgewichtsanteil eines zweiten thermoplastischen Kernmaterials mit einer zweiten Kernübergangstemperatur und einer zweiten Viskosität mit niedriger Scherung umfasst;

wobei die erste Kernübergangstemperatur mindestens 10% niedriger als die zweite Kernübergangstemperatur ist und/oder die erste Viskosität mit niedriger Scherung mindestens 50% niedriger als die zweite Viskosität mit niedriger Scherung ist;

einen ersten Satz von Verstärkungsfasern, der mit dem ersten und zweiten Satz von Harzfasern gekoppelt ist, wobei jeder der ersten Sätze von Verstärkungsfasern einen Elastizitätsmodul aufweist, der größer als 8,5 Gigapascal (GPa) ist; und

eine oder mehrere Häute, die jeweils einen Stapel aus einer oder mehreren Schichten enthalten, wobei jede unidirektionale oder gewebte Fasern aufweist, die in einem thermoplastischen Hautmaterial dispergiert sind; wobei jede der einen oder mehreren Häute so mit dem Kern gekoppelt ist (sind), dass die Haut mindestens einen Teil der oberen Oberfläche oder der unteren Oberfläche des Kerns bedeckt.

2. Stapel nach Anspruch 1, wobei für mindestens eine der nicht gewebten Schichten:

der erste Satz von Verstärkungsfasern Kohlenstofffasern, Aramidfasern, Keramikfasern, Basaltfasern, Cellulosefasern oder Flüssigkristallpolymerfasern umfasst oder
der erste Satz von Verstärkungsfasern Kohlenstofffasern oder Aramidfasern umfasst.

3. Stapel nach Anspruch 1 oder 2, wobei mindestens eine der nicht gewebten Schichten Folgendes umfasst:

einen zweiten Satz von Verstärkungsfasern, der mit dem ersten Satz von Harzfasern und dem ersten Satz von Verstärkungsfasern gekoppelt ist, wobei jeder der zweiten Sätze von Verstärkungsfasern einen Elastizitätsmodul aufweist, der größer als 8,5 GPa ist;
wobei der zweite Satz von Verstärkungsfasern Folgendes umfasst:

Kohlenstofffasern, Aramidfasern, Keramikfasern, Basaltfasern, Cellulosefasern oder Flüssigkristallpolymerfasern; oder
Aramidfasern; und

jeder der zweiten Sätze von Verstärkungsfasern ein Material umfasst, das sich von einem Material jedes der ersten Sätze von Verstärkungsfasern unterscheidet.

4. Stapel nach einem der Ansprüche 1 bis 3, wobei mindestens eine der nicht gewebten Schichten zwischen etwa 5 Gew.-% und etwa 25 Gew.-% des ersten Satzes von Harzfasern, optional zwischen etwa 5 Gew.-% und etwa 15 Gew.-% des ersten Satzes von Harzfasern umfasst.

5. Stapel nach einem der Ansprüche 1 bis 4, wobei mindestens eine der nicht gewebten Schichten zwischen etwa 45 Gew.-% und etwa 55 Gew.-% des zweiten Satzes von Harzfasern umfasst.

6. Verbundstoff, der Folgendes umfasst:

einen Kern mit einem Stapel aus einer oder mehreren nicht gewebten Schichten, wobei einer davon mindestens einen Teil einer oberen Oberfläche des Kerns definiert und einer mindestens einen Teil einer unteren Oberfläche des Kerns definiert, wobei mindestens eine der nicht gewebten Schichten Folgendes aufweist:

ein erstes thermoplastisches Kernmaterial mit einer ersten Kernübergangstemperatur und einer ersten Viskosität mit niedriger Scherung;
einen Satz von Harzfasern, die in dem ersten thermoplastischen Kernmaterial dispergiert sind, wobei jeder der Sätze von Harzfasern Folgendes umfasst:

mindestens einen Hauptgewichtsanteil eines zweiten thermoplastischen Kernmaterials mit einer zweiten Kernübergangstemperatur und einer zweiten Viskosität mit niedriger Scherung;
wobei die erste Kernglastemperatur mindestens 10% niedriger als die zweite Kernübergangstemperatur ist und/oder die erste Viskosität mit niedriger Scherung mindestens 50% niedriger als die zweite Viskosität mit niedriger Scherung ist;

einen ersten Satz von Verstärkungsfasern, der mit dem Satz von Harzfasern gekoppelt ist, wobei jeder der ersten Sätze von Verstärkungsfasern einen Elastizitätsmodul aufweist, der größer als 8,5 GPa ist;

eine oder mehrere Häute, die jeweils einen Stapel aus einer oder mehreren Schichten enthalten, wobei jede unidirektionale oder gewebte Fasern aufweist, die in einem thermoplastischen Hautmaterial dispergiert sind; wobei jede der einen oder mehreren Häute so mit dem Kern gekoppelt ist (sind), dass die Haut mindestens einen Teil der oberen Oberfläche oder der unteren Oberfläche des Kerns bedeckt.

**7.** Verbundstoff, der Folgendes umfasst:

einen Kern mit einem Stapel aus einer oder mehreren nicht gewebten Schichten, wobei einer davon mindestens einen Teil einer oberen Oberfläche des Kerns definiert und einer mindestens einen Teil einer unteren Oberfläche des Kerns definiert, wobei mindestens eine der nicht gewebten Schichten Folgendes aufweist:

ein Matrixmaterial, das Folgendes umfasst:

ein erstes thermoplastisches Kernmaterial; und
Bereiche, die ein zweites thermoplastisches Kernmaterial umfassen, die in dem ersten thermoplastischen Kernmaterial dispergiert sind;
wobei Teile des Matrixmaterials außerhalb der Bereiche eine erste Kernübergangstemperatur und eine erste Viskosität mit niedriger Scherung aufweisen, und Teile des Matrixmaterials innerhalb der Bereiche eine zweite Kernübergangstemperatur und eine zweite Viskosität mit niedriger Scherung aufweisen; und
wobei die erste Kernübergangstemperatur mindestens 10% niedriger als die zweite Kernübergangstemperatur ist und/oder die erste Viskosität mit niedriger Scherung mindestens 50% niedriger als die zweite Viskosität mit niedriger Scherung ist; und

einen ersten Satz von Verstärkungsfasern, die in dem Matrixmaterial dispergiert sind, wobei der erste Satz von Verstärkungsfasern einen Elastizitätsmodul aufweist, der größer als 8,5 GPa ist; und

eine oder mehrere Häute, die jeweils einen Stapel aus einer oder mehreren Schichten enthalten, wobei jede unidirektionale oder gewebte Fasern aufweist, die in einem thermoplastischen Hautmaterial dispergiert sind; wobei jede der einen oder mehreren Häute so mit dem Kern gekoppelt ist (sind), dass die Haut mindestens einen Teil der oberen Oberfläche oder der unteren Oberfläche des Kerns bedeckt.

**8.** Verbundstoff nach Anspruch 6 oder 7, wobei für mindestens eine der nicht gewebten Schichten:

der erste Satz von Verstärkungsfasern Kohlenstofffasern, Aramidfasern, Keramikfasern, Basaltfasern, Cellulosefasern oder Flüssigkristallpolymerfasern umfasst oder
der erste Satz von Verstärkungsfasern Kohlenstofffasern oder Aramidfasern umfasst.

**9.** Verbundstoff nach einem der Ansprüche 6 bis 8, wobei mindestens eine der nicht gewebten Schichten zwischen etwa 5 Gew.-% und etwa 30 Gew.-% des ersten Satzes von Verstärkungsfasern umfasst.

**10.** Verbundstoff nach einem der Ansprüche 6 bis 9, wobei mindestens eine der nicht gewebten Schichten Folgendes umfasst:

einen zweiten Satz von Verstärkungsfasern, der mit dem ersten Satz von Verstärkungsfasern gekoppelt ist, wobei jeder der zweiten Sätze von Verstärkungsfasern einen Elastizitätsmodul aufweist, der größer als 8,5 GPa ist;
wobei der zweite Satz von Verstärkungsfasern Folgendes umfasst:

Kohlenstofffasern, Aramidfasern, Keramikfasern, Basaltfasern, Cellulosefasern oder Flüssigkristallpolymerfasern; oder
Aramidfasern; und

jeder der zweiten Sätze von Verstärkungsfasern ein Material umfasst, das sich von einem Material jedes der ersten Sätze von Verstärkungsfasern unterscheidet.

**11.** Verbundstoff nach Anspruch 10, wobei mindestens eine der nicht gewebten Schichten zwischen etwa 20 Gew.-% und etwa 30 Gew.-% des zweiten Satzes von Verstärkungsfasern umfasst.

**12.** Verbundstoff nach einem der Ansprüche 6 bis 11, wobei für mindestens eine der nicht gewebten Schichten das erste thermoplastische Kernmaterial Folgendes umfasst: Polyethylenterephthalat (PET), Polycarbonat (PC), Polybutylenterephthalat (PBT), Poly(1,4-cyclohexylidencyclohexan-1,4-dicarboxylat) (PCCD); Glykol-modifiziertes Polycyclohexylterephthalat (PCTG), Poly(phenylenoxid) (PPO), Polypropylen (PP), Polyethylen (PE), Polyvinylchlorid (PVC), Polystyrol (PS), Polymethylmethacrylat (PMMA), Polyethylenimin oder Polyetherimid (PEI) oder ein Derivat davon, ein thermoplastisches Elastomer (TPE), ein Terephthalsäure- (TPA) Elastomer, Poly(cyclohexandimethylenterephthalat) (PCT), Polyethylennaphthalat (PEN), ein Polyamid (PA), Polystyrolsulfonat (PSS), Polyetheretherketon (PEEK), Polyetherketonketon (PEKK), Polyphenylensulfid (PPS), ein Copolymer davon oder eine Mischung davon, wobei das erste thermoplastische Kernmaterial optional PC umfasst.

**13.** Verbundstoff nach einem der Ansprüche 6 bis 12, wobei mindestens eine der nicht gewebten Schichten zwischen etwa 5 Gew .-% und etwa 25 Gew .-% des ersten thermoplastischen Kernmaterials, optional zwischen etwa 5 Gew.-% und etwa 15 Gew.-% des ersten thermoplastischen Kernmaterials umfasst.

**14.** Verbundstoff nach einem der Ansprüche 6 bis 13, wobei für mindestens eine der nicht gewebten Schichten das zweite thermoplastische Kernmaterial Folgendes umfasst: PET, PC, PBT, PCCD, PCTG, PPO, PEI oder ein Derivat davon, PCT, PEN, ein PA, PSS, PEEK, PEKK, PPS, ein Copolymer davon oder eine Mischung davon, wobei das zweite thermoplastische Kernmaterial optional PEI umfasst.

**15.** Verbundstoff nach einem der Ansprüche 6 bis 14, wobei mindestens eine der nicht gewebten Schichten zwischen etwa 45 Gew.-% und etwa 55 Gew.-% des zweiten thermoplastischen Kernmaterials umfasst.

**Revendications**

**1.** Empilement de couches à utiliser dans la fabrication d'un composite, l'empilement comprenant :

une âme comprenant un empilement d'une ou plusieurs couches non tissées, dont l'une définit au moins une partie d'une surface supérieure de l'âme, et dont l'une définit au moins une partie d'une surface inférieure de l'âme, au moins l'une des couches non tissées ayant :

un premier ensemble de fibres de résine, chacune comprenant au moins une majorité, en poids, d'un premier matériau thermoplastique d'âme ayant une première température de transition d'âme et une première viscosité à faible cisaillement ; et
un second ensemble de fibres de résine couplé au premier ensemble de fibres de résine, chacune du second ensemble de fibres de résine comprenant au moins une majorité, en poids, d'un second matériau thermoplastique d'âme ayant une seconde température de transition d'âme et une seconde viscosité à faible cisaillement ;

dans lequel la première température de transition d'âme est au moins 10% inférieure à la seconde température de transition d'âme et / ou la première viscosité à faible cisaillement est au moins 50% inférieure à la seconde viscosité à faible cisaillement ;
un premier ensemble de fibres de renforcement couplé aux premier et second ensembles de fibres de résine, chacune du premier ensemble de fibres de renforcement ayant un module d'élasticité qui est supérieur à 8,5 gigapascals (GPa) ; et
une ou plusieurs peaux, chacune comprenant un empilement d'une ou plusieurs couches, chacune ayant des fibres unidirectionnelles ou tissées dispersées dans un matériau thermoplastique de peau ;
dans lequel chacune des peaux est couplée à l'âme de telle sorte que la peau recouvre au moins une partie de la surface supérieure ou de la surface inférieure de l'âme.

**2.** Empilement selon la revendication 1, dans lequel, pour au moins l'une des couches non tissées :

le premier ensemble de fibres de renforcement comprend des fibres de carbone, des fibres d'aramide, des fibres céramiques, des fibres de basalte, des fibres cellulosiques ou des fibres polymères à cristaux liquides ; ou
le premier ensemble de fibres de renforcement comprend des fibres de carbone ou des fibres d'aramide.

**3.** Empilement selon la revendication 1 ou 2, dans lequel au moins l'une des couches non tissées comprend :

un second ensemble de fibres de renforcement couplé au premier ensemble de fibres de résine et au premier ensemble de fibres de renforcement, chacune du second ensemble de fibres de renforcement ayant un module d'élasticité supérieur à 8,5 GPa ;
le second ensemble de fibres de renforcement comprend :

des fibres de carbone, des fibres d'aramide, des fibres céramiques, des fibres de basalte, des fibres cellulosiques ou des fibres polymères à cristaux liquides ; ou
des fibres d'aramide ; et
chacune du second ensemble de fibres de renforcement comprend un matériau qui est distinct d'un matériau de chacune du premier ensemble de fibres de renforcement.

4. Empilement selon l'une quelconque des revendications 1 à 3, dans lequel au moins une des couches non tissées comprend entre environ 5% et environ 25%, en poids, du premier ensemble de fibres de résine, éventuellement entre environ 5% et environ 15%, en poids, du premier ensemble de fibres de résine.

5. Empilement selon l'une quelconque des revendications 1 à 4, dans lequel au moins une des couches non tissées comprend entre environ 45% et environ 55%, en poids, du second ensemble de fibres de résine.

6. Composite comprenant :

une âme comprenant un empilement d'une ou plusieurs couches non tissées, dont l'une définit au moins une partie d'une surface supérieure de l'âme, et dont l'une définit au moins une partie d'une surface inférieure de l'âme, au moins l'une des couches non tissées ayant :

un premier matériau thermoplastique d'âme ayant une première température de transition d'âme et une première viscosité à faible cisaillement ;
un ensemble de fibres de résine dispersées dans le premier matériau thermoplastique d'âme, chacune de l'ensemble de fibres de résine comprenant :

au moins une majorité, en poids, d'un second matériau thermoplastique d'âme ayant une seconde température de transition d'âme et une seconde viscosité à faible cisaillement ;
dans lequel la première température de verre d'âme est au moins 10% inférieure à la seconde température de transition d'âme et / ou la première viscosité à faible cisaillement est au moins 50% inférieure à la seconde viscosité à faible cisaillement ;
un premier ensemble de fibres de renforcement couplé à l'ensemble de fibres de résine, chacune du premier ensemble de fibres de renforcement ayant un module d'élasticité supérieur à 8,5 GPa ;
une ou plusieurs peaux, chacune comprenant un empilement d'une ou plusieurs couches, chacune ayant des fibres unidirectionnelles ou tissées dispersées dans un matériau thermoplastique de peau ;
dans lequel chacune des peaux est couplée à l'âme de telle sorte que la peau recouvre au moins une partie de la surface supérieure ou de la surface inférieure de l'âme.

7. Composite comprenant :

une âme comprenant un empilement d'une ou plusieurs couches non tissées, dont l'une définit au moins une partie d'une surface supérieure de l'âme, et dont l'une définit au moins une partie d'une surface inférieure de l'âme, au moins l'une des couches non tissées ayant :
un matériau de matrice comprenant :
un premier matériau thermoplastique d'âme ; et
des régions comprenant un second matériau thermoplastique d'âme qui sont dispersées dans le premier matériau thermoplastique d'âme ;
dans lequel des parties du matériau de matrice à l'extérieur des régions ont une première température de transition d'âme et une première viscosité à faible cisaillement, et des parties du matériau de matrice à l'intérieur des régions ont une seconde température de transition d'âme et une seconde viscosité à faible cisaillement ; et
dans lequel la première température de transition d'âme est au moins 10% inférieure à la seconde température de transition d'âme et / ou la première viscosité à faible cisaillement est au moins 50% inférieure à la seconde viscosité à faible cisaillement ; et
un premier ensemble de fibres de renforcement dispersées dans le matériau de matrice, le premier ensemble de fibres de renforcement ayant un module d'élasticité supérieur à 8,5 GPa ; et

une ou plusieurs peaux, chacune comprenant un empilement d'une ou plusieurs couches, chacune ayant des fibres unidirectionnelles ou tissées dispersées dans un matériau thermoplastique de peau ;

dans lequel chacune des peaux est couplée à l'âme de telle sorte que la peau recouvre au moins une partie de la surface supérieure ou de la surface inférieure de l'âme.

8. Composite selon la revendication 6 ou 7, dans lequel, pour au moins l'une des couches non tissées :

le premier ensemble de fibres de renforcement comprend des fibres de carbone, des fibres d'aramide, des fibres céramiques, des fibres de basalte, des fibres cellulosiques ou des fibres polymères à cristaux liquides ; ou

le premier ensemble de fibres de renforcement comprend des fibres de carbone ou des fibres d'aramide.

9. Composite selon l'une quelconque des revendications 6 à 8, dans lequel au moins l'une des couches non tissées comprend entre environ 5% et environ 30%, en poids, du premier ensemble de fibres de renforcement.

10. Composite selon l'une quelconque des revendications 6 à 9, dans lequel au moins l'une des couches non tissées comprend :

un second ensemble de fibres de renforcement couplé au premier ensemble de fibres de renforcement, chacune du second ensemble de fibres de renforcement ayant un module d'élasticité supérieur à 8,5 GPa ;

le second ensemble de fibres de renforcement comprend :

des fibres de carbone, des fibres d'aramide, des fibres céramiques, des fibres de basalte, des fibres cellulosiques ou des fibres polymères à cristaux liquides ; ou

des fibres d'aramide ; et

chacune du second ensemble de fibres de renforcement comprend un matériau qui est distinct d'un matériau de chacune du premier ensemble de fibres de renforcement.

11. Composite selon la revendication 10, dans lequel au moins l'une des couches non tissées comprend entre environ 20% et environ 30%, en poids, du second ensemble de fibres de renforcement.

12. Composite selon l'une quelconque des revendications 6 à 11, dans lequel, pour au moins l'une des couches non tissées, le premier matériau thermoplastique d'âme comprend du polytéréphtalate d'éthylène (PET), du polycarbonate (PC), du polytéréphtalate de butylène (PBT), du poly(1,4-cyclohexylidène cyclohexane-1,4-dicarboxylate) (PCCD), du polytéréphtalate de cyclohexyle modifié au glycol (PCTG), du poly(oxyde de phénylène) (PPO), du polypropylène (PP), du polyéthylène (PE), du polychlorure de vinyle (PVC), du polystyrène (PS), du polyméthacrylate de méthyle (PMMA), du polyéthylèneimine ou polyétherimide (PEI) ou un dérivé de ceux-ci, un élastomère thermoplastique (TPE), un élastomère d'acide téréphtalique (TPA), du poly(téréphtalate de cyclohexanediméthylène) (PCT), du polynaphtalate d'éthylène (PEN), un polyamide (PA), du polystyrène sulfonate (PSS), du polyétheréthercétone (PEEK), du polyéthercétonecétone (PEKK), du polysulfure de phénylène (PPS), un copolymère de ceux-ci, ou un mélange de ceux-ci, éventuellement, le premier matériau thermoplastique d'âme comprend du PC.

13. Composite selon l'une quelconque des revendications 6 à 12, dans lequel au moins l'une des couches non tissées comprend entre environ 5% et environ 25%, en poids, de la première matière thermoplastique d'âme, éventuellement entre environ 5% et environ 15%, en poids, de la première matière thermoplastique d'âme.

14. Composite selon l'une quelconque des revendications 6 à 13, dans lequel, pour au moins l'une des couches non tissées, le second matériau thermoplastique d'âme comprend du PET, PC, PBT, PCCD, PCTG, PPO, PEI ou un dérivé de ceux-ci, PCT, PEN, un PA, PSS, PEEK, PEKK, PPS, un copolymère de ceux-ci, ou un mélange de ceux-ci, éventuellement, le second matériau thermoplastique d'âme comprend du PEI.

15. Composite selon l'une quelconque des revendications 6 à 14, dans lequel au moins l'une des couches non tissées comprend entre environ 45% et environ 55%, en poids, du second matériau thermoplastique d'âme.

**FIG. 1A**

18a

10

38

1B ... 1B

22j 22i 22h 22g 22f 22e 22d 26a 74 46 30a

18a 30b

22a

14 22b

22c

18b 30c

10 26b **FIG. 1B** 122 30d

42

EP 3 552 814 B1

FIG. 1C

FIG. 2B

FIG. 2A

FIG. 5

142

146

150

FIG. 4

114

110

118a

118b

FIG. 3B

78a
78b
94b
102
106
94a
78
82
30f
38

FIG. 3A

90
86
38
30e
82
78

FIG. 6A

EP 3 552 814 B1

FIG. 6B

EP 3 552 814 B1

FIG. 6C

FIG. 6D

EP 3 552 814 B1

FIG. 6E

EP 3 552 814 B1

**FIG. 6F**

170  186  182

174  162

**FIG. 6G**

162  170

182  186  174

**FIG. 6H**

162  170  182  186

174  166

**FIG. 6I**

174  170

182  186  162

EP 3 552 814 B1

**FIG. 7**

**FIG. 8**

**FIG. 9A**

**FIG. 9B**

**FIG. 9C**

**FIG. 9D**

314a
314b
310
110
318
322

EP 3 552 814 B1

40

**FIG. 10A**

FIG. 10B

**FIG. 11A**

**FIG. 11B**

FIG. 12

FIG. 13B

FIG. 13D

FIG. 13A

FIG. 13C

FIG. 14A

FIG. 14B

FIG. 14C

FIG. 15B

FIG. 15D

FIG. 15A

FIG. 15C

FIG. 16B

FIG. 16D

FIG. 16A

FIG. 16C

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20170203551 A